# EUROPEAN PATENT SPECIFICATION

(11) **EP 4 646 896 B1**
(45) Date of publication and mention of the grant of the patent: **18.11.2026**
(21) Application number: 23708674.9
(22) Date of filing: 16.02.2023
(51) Int. Cl.: H04W 76/14, H04W 76/15, H04W 88/04, H04W 40/22, H04W 92/18

(54) **MULTI-PATH CONFIGURATION FOR SIDELINK (SL) RELAY**
MEHRWEGKONFIGURATION FÜR SIDELINK (SL)-RELAIS
CONFIGURATION À TRAJETS MULTIPLES POUR RELAIS DE LIAISON LATÉRALE (SL)

(43) Date of publication of application: 12.11.2025
(73) Proprietor: Apple Inc., Cupertino CA 95014 (US)
(72) Inventor: WU, Zhibin, Cupertino, California 95014 (US); GURUMOORTHY, Sethuraman, Cupertino, California 95014 (US); CHENG, Peng, Beijing 100022 (CN); SIROTKIN, Alexander, Herzliya, 4673314 (IL); KUO, Ping-Heng, London, Greater London EC2N 4BQ (GB); PALLE VENKATA, Naveen Kumar R, San Diego, California 92121 (US); ROSSBACH, Ralf, 85579 Munich (DE); XU, Fangli, Beijing 100022 (CN); HU, Haijing, Cupertino, California 95014 (US); CHEN, Yuqin, Beijing 100022 (CN)
(74) Representative: COPA Copenhagen Patents
(86) International application number: PCT/CN2023/076549
(87) International publication number: WO 2024/168719

(56) References cited:
- WO-A1-2021/224149
- WO-A1-2022/212749
- US-A1- 2021 297 992
- LIN CHEN ET AL: "Discussion on the remaining issues of multi-path relaying", vol. 3GPP RAN 2, no. Toulouse, FR; 20221114 - 20221118, 4 November 2022 (2022-11-04), XP052215918, Retrieved from the Internet <URL:https://www.3gpp.org/ftp/TSG_RAN/WG2_RL2/TSGR2_120/Docs/R2-2211814.zip R2-2211814 Discussion on the remaining issues of multi-path relaying.docx> [retrieved on 20221104]
- ZTE CORPORATION ET AL: "Discussion on remaining issues on service continuity", vol. RAN WG2, no. electronic; 20220117 - 20220126, 11 January 2022 (2022-01-11), XP052094447, Retrieved from the Internet <URL:https://ftp.3gpp.org/tsg_ran/WG2_RL2/TSGR2_116bis-e/Docs/R2-2201346.zip R2-2201346 Discussion on remaining issues on service continuity.doc> [retrieved on 20220111]
- STEVEN XU ET AL: "discussion on the support for multi-path", vol. 3GPP RAN 3, no. Toulouse, FR; 20221114 - 20221118, 4 November 2022 (2022-11-04), XP052223798, Retrieved from the Internet <URL:https://www.3gpp.org/ftp/TSG_RAN/WG3_Iu/TSGR3_118/Docs/R3-226314.zip R3-226314 Multi-path support.docx> [retrieved on 20221104]

## Description

### FIELD

The present disclosure is related to wireless technology and multiple path configuration for sidelink (SL) relay.

### BACKGROUND

As the number of mobile devices within wireless networks, and the demand for mobile data traffic, continue to increase, changes are made to system requirements and architectures to better address current and anticipated demands. For example, some wireless communication networks (e.g., fifth generation (5G) or new radio (NR) networks) may be developed to include UE to UE (U2U) relay communications or UE to network (NW) (U2N) relay communications. In such scenarios, path sidelink (SL) relay enhancements can be made.

Relevant prior art disclosures in this technical field are: WO 2021/224149 A1 and US 2021/297992 A1.

### BRIEF DESCRIPTION OF THE DRAWINGS

FIG. 1 illustrates examples of UE to NW (U2N) relay communications for single path (SP) and multi-path (MP) relay configurations in accordance with various aspects.
FIG. 2 illustrates an example of U2N relay related sidelink (SL) information elements (IEs) 200 in accordance with various aspects.
FIG. 3 illustrates another example of U2N relay related sidelink (SL) information elements (IEs) 200 in accordance with various aspects.
FIG. 4 illustrates an example of U2N signaling for path changing scenarios for MP relay communications in accordance with various aspects.
FIG. 5 illustrates an example of a signaling diagram for MP relay indirect path addition in accordance with various aspects.
FIG. 6 illustrates an example of a signaling diagram for MP relay direct path addition in accordance with various aspects.
FIG. 7 illustrates an example of a signaling diagram for MP relay indirect path deletion in accordance with various aspects.
FIG. 8 illustrates an example of a signaling diagram for MP relay direct path deletion in accordance with various aspects.
FIG. 9 illustrates an example of a signaling diagram for MP relay indirect path addition when a relay UE is in a connected state in accordance with various aspects.
FIG. 10 illustrates an example of a signaling diagram for MP relay indirect path addition when a relay UE is not in a connected state in accordance with various aspects.
FIG. 11 illustrates an example of U2N signaling for path failures of path addition / change in accordance with various aspects.
FIG. 12 illustrates another example of a signaling diagram for MP relay when a relay UE is not in a connected state in accordance with various aspects.
FIG. 13 illustrates another example of a signaling diagram for MP relay when a relay UE is not in a connected state in accordance with various aspects.
FIG. 14 illustrates an exemplary block diagram illustrating an example of user equipment(s) (UEs) communicatively coupled a network with network components as peer devices useable in connection with various embodiments (aspects) described herein.
FIG. 15 illustrates an example simplified block diagram of a user equipment (UE) wireless communication device or other network device / component (e.g., eNB, gNB) in accordance with various aspects.

### DETAILED DESCRIPTION

The following detailed description refers to the accompanying drawings. Like reference numbers in different drawings may identify the same or similar features, elements, operations, etc. Additionally, the present disclosure is not limited to the following description as other implementations may be utilized, and structural or logical changes made, without departing from the scope of the present disclosure.

Various aspects include a user equipment (UE) operating in UE to Network (NW) (U2N) relay communication by using both a direct path and an indirect path concurrently or at the same time in a multi-path (MP) sidelink (SL) relay configuration. An objective of SL relaying such as UE to UE (U2U) or U2N is to extend coverage of SL communications, as well as the network. Moreover, power efficiency and enhanced quality of service (QoS) are objectives for enhancing U2U or U2N communication. Two types of relaying include U2N, used generally to extend cell coverage and provide reachability for cell-edge users (or out-of-coverage users) to reach the Packet Data Network (PDN), and U2U with a single hop SL communication. For out-of-coverage scenarios, the single hop SL communication may not be sufficient to ensure SL coverage. Therefore, a UE-to-UE relay can extend SL coverage by using a single indirect path (via a relay UE) to reach the base station (e.g., gNB). Various operations to enable the SL relay communications include relay (re)selection, relay/remote UE authorization, QoS provisioning, service continuity, and security mechanisms with respect to the relay node architecture (e.g., layer 2 (L2) or layer 3 (L3) of the protocol stack). Additionally, a remote UE can utilize both a direct path and an indirect path in a multi-path (MP) configuration for communications at the same time to further extend coverage, as well as manage and improve power efficiency and QoS.

Various aspects include configuring radio resource control (RRC) messages and signal paths for an MP SL relay for a remote UE, the initiator of the MP SL relay configuration. Additionally, or alternatively, when the user plane (UP) /control plane (CP) traffic is migrated from a single path (SP) to an MP SL relay configuration, the handling of link failures and the mitigating of data loss becomes desired to ensure QoS or a quality of experience (QoE). Additionally, or alternatively, radio link monitoring (RLM) in the MP sidelink communications and path failure reporting can be enhanced for further improving QoE.

In an aspect, signaling for the MP SL relay with the remote UE can be configured such that a multi-path configuration information element (IE) indicates whether the remote UE is configured with MP SL relay or not. This can be determined by sending an IE using the MP SL relay (either an SP SL relay path or just using a single direct path without using any relay UE). For example, an SL-MultiPathConfig IE can be provided under an RRC reconfiguration (RRCReconfiguration) IE to establish MP SL relay communications for a remote UE. Alternatively, or additionally, the RRCReconfiguration IE can be provided as a part of a reconfiguration with synchronization (ReconfigurationWithSync) IE, which is configured under a master cell group IE. Alternatively, or additionally, various measurement enhancements can be triggered for radio link monitoring under the Measurement configuration IE of the RRCReconfiguration IE, for example. Alternatively, or additionally, a packet data convergence protocol (PDCP) configuration (PDCP-config) IE can provide a signaling radio bearer (SRB) / data radio bearer (DRB) configuration to signal or trigger a status for SP or MP SL communications.

In an aspect, a timer stop condition can be changed given that a "complete" message may not be transmitted via the indirect path in an MP SL relay configuration. The timer stop condition is the condition in which a timer is stopped to indicate the path is ready for use. Although in cases where, a relay UE may not be in a connected state, transmissions may be dropped if it does not properly delay using the MP SL relay. To account for such a possibility, the remote UE can operate to postpone an application of the PDCP configuration for providing a complete message via the indirect path or the direct path of the MP configuration until a confirmation signaling is received from either the base station (e.g., gNB) or a relay UE in order to confirm that the direct path is established for use.

In an aspect, the remote UE can be configured to further monitor and report hybrid automatic repeat request (HARQ) statistics via the direct path in an MP SL relay. For example, HARQ statistics can include a number of consecutive HARQ NACKs, a number of total HARQ NACKs, a number of consecutive HARQ DTXs, a number of total HARQ DTXs, a number of radio link control (RLC) failures, or a combination of the HARQ statistics organized in a HARQ-infoList to detail each HARQ outcome. The reporting can be triggered based on a threshold associated with a HARQ statistic to trigger the reporting, as in a measurement configuration IE (e.g., a meas-config), for example. Enhancing the SL RLM in this manner can enable a remote UE in MP SL relay to report and monitor more HARQ statistics via the direct path as both are being used in SL. This can further enable the base station to adjust the MP relay more timely, and respond to changing radio conditions of SL faster with the additional HARQ statistics.

Enhancements can further include path failure reporting by the remote UE. The remote UE can be configured to report a failure of a first path of the MP SL relay, via a second other path (e.g., either the direct path or the indirect path), in response to a non-split SRB still being configured for the second path. Alternatively or additionally, the UE can report a path addition / change failure in response to a fallback to an original or previous SP or MP SL relay configuration based on at least one of: a Multi-Path Failure report RRC message (Multi-PathFailureReport RRC) message or a sidelink UE information NR (SidelinkUEInformationNR) message.

Additional aspects and details of the disclosure are further described below with reference to figures.

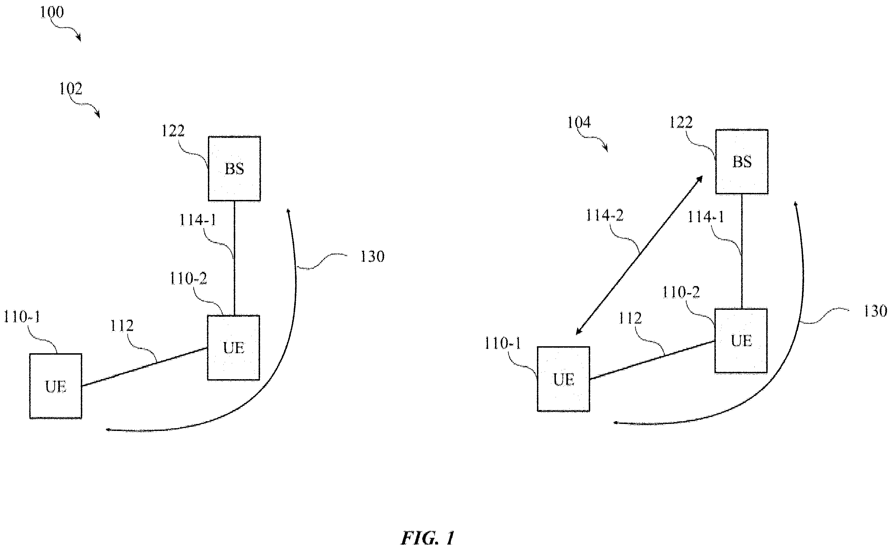

FIG. 1 illustrates examples of a network 100 with different SL relay configurations, including an SP SL relay configuration 102 and an MP SL relay configuration 104. The examples include a remote UE 110-1 and a relay UE 110-2 communicatively coupled via an SL interface 112. UEs 110-1 and 110-2 can include smartphones (e.g., handheld touchscreen mobile computing devices connectable to one or more wireless communication networks). Additionally, or alternatively, UEs 110 can include other types of mobile or non-mobile computing devices configured for wireless communications, such as personal data assistants (PDAs), pagers, laptop computers, desktop computers, wireless handsets, etc. UEs 110 can include internet of things (IoT) devices (or IoT UEs) that can comprise a network access layer designed for low-power loT applications utilizing short-lived UE connections. Additionally, or alternatively, an IoT UE can utilize one or more types of technologies, such as machine-to-machine (M2M) communications or machine-type communications (MTC) (e.g., to exchanging data with an MTC server or other device via a public land mobile network (PLMN)), proximity-based service (ProSe) or device-to-device (D2D) communications, sensor networks, IoT networks, and more. Additionally, UEs 110-1, 110-2 can include vehicle UEs, pedestrian UEs, or vehicle to everything (V2X) UEs.

UEs 110-1 and 110-2 are communicatively coupled in a U2N SL relay configuration, where the relay UE 110-2 connects at least one remote UE 110-1 to the network or base station 122 via a wireless channel 114-1, which can comprise a physical communications interface / layer such as a Uu interface link. In the SP SL relay configuration 102, the remote UE 110-1 can use a single indirect path via relay UE 110-2 to communicate with the base station 122 using interfaces 112 and 114. When the remote UE 110-1 is within coverage of the base station 122, the remote UE 110-1 can switch between using the indirect path (interfaces 112 and 114-1) and using only a direct path 130 (e.g., a direct Uu path) as alternative communication paths.

In contrast to the SP SL relay configuration, the remote UE 110-1 of the MP SL relay configuration 104 can include a direct link 114-2 operable at the same time as the indirect path formed by interfaces 112 and 114-1. Rather than having to communicate via the direct path 114-2 as an alternative path 130, the remote UE 110-1 can utilize both the indirect path (interfaces 112, 114-1) and the direct path 114-2 together simultaneously, at the same time, or concurrently (i.e., simultaneously and independently as a function of time). In the MP SL relay configuration 104, the remote UE 110-1 has the indirect path with interfaces 112 and 114-1 via the relay UE 110-2 and also has a direct path 114-2 with the gNB or base station 122 because remote UE 110-1 is still within coverage of the base station 122. Any UE operating in-coverage of the base station 122, for example, would have both paths available at the same time, but the remote UE 110-1 can be configured also to communicate with different interfaces concurrently. In a first scenario, the interface 112 in the MP SL relay configuration 104 can be a direct link for SL communication defined by 3GPP, or in another second scenario it could operate as a non-3GPP communication link path (e.g., USB, WiFI, Bluetooth, wired, cable, or other communication methods defined by other standards) between the UEs 110-1 and 110-2, while the direct path 114-2 is a cellular 3GPP interface or Uu link, for example, when in the MP SL relay configuration 104. The direct path 114-2 can be configured to support a primary cell (PCell) for both the first scenario and the second scenario when the UE is in a multi-path SL relay configuration; this means that when the remote UE 110-1 uses a SP SL relay (indirect path with 112 plus 114-1) and operates to add a direct path, the PCell may change such as in a handover (HO) operation, which may happen when a serving cell of the direct path is not the same as the serving cell of the relay UE 110-2 (e.g. an inter-cell intra-gNB change).

A split signal radio bearer (SRB) can be configured with or without duplication for both the first and second scenarios, which is used for transmission of the radio resource control (RRC) or non-access stratum (NAS) messages. In particular, a non-split SRB as SRB1 / SRB2 can be configured on the direct path 114-2. In NR, SRB1 can be for RRC messages, which may or may not include a NAS message, as well as for NAS messages prior to the establishment of SRB2, using a dedicated control channel (DCCH). SRB2 is for NAS messages, which utilize the DCCH logical channel, and has a lower priority than SRB1; it is configured by the network upon security activation.

In an aspect, the interface 112 can operate as a first hop of the SL relay indirect path, while the interface 114-1 as a second hop of the indirect path. The first hop as interface 112 can be referred to as a PC5 hop where the interface 112 is a PC5 link. PC5 refers to a reference point where the UE directly communicates with another UE over a direct channel. In this case, the communication with the base station is not required within the two ends of this communication channel. In a system architectural level, proximity service (ProSe) is the feature that specifies the architecture of the direct communication between UEs. In 3GPP RAN specifications, "sidelink" is the terminology to refer to the direct communication over PC5. PC5 interface was originally defined to address the needs of mission-critical communication for public safety community (Public Safety-LTE, or PS-LTE) in release 13, and extended to 5G architecture as well. The motivation of the mission-critical communication has been to allow law enforcement agencies or emergency rescue to use cellular communications even when the infrastructure is not available, such as in a natural disaster scenario, as in D2D or SL communication for 5GNR. In release 14 onwards, the use of PC5 interface has been expanded to meet various market needs such as communication involving wearable devices (e.g., smartwatch). The PC5 interface can be re-applied to the direct communication in mobile devices including UEs or Vehicle UEs. Additionally, a unicast transmission can refer to a one-to-one transmission from one point in the network to another point; that is, one sender and one receiver, where each can have a network address uniquely identifying a single endpoint.

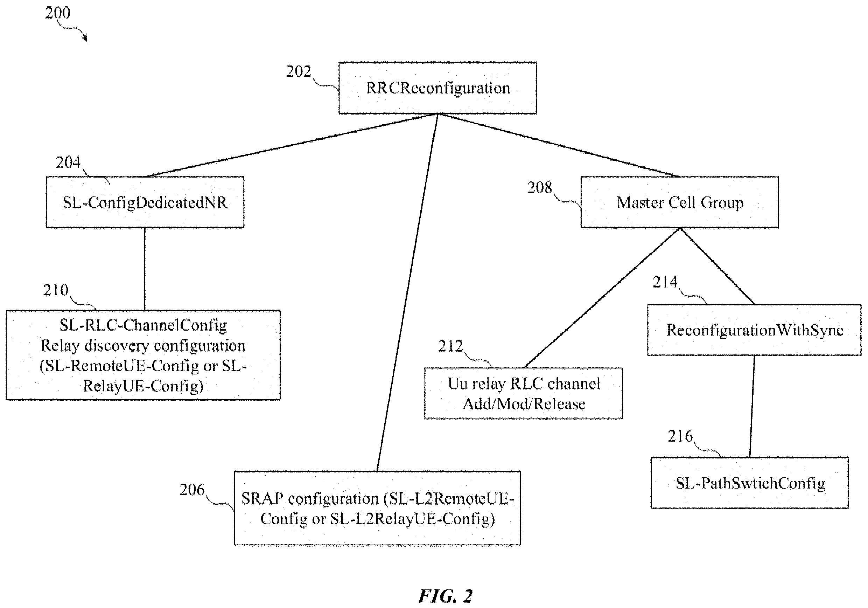

FIG. 2 illustrates SL relay related information elements (IEs) 200 in different structures for a U2N relay. Each of the IEs are from an RRC reconfiguration (RRCReconfiguration) IE 202 for the relay configuration. RRC reconfiguration is a primary act in establishing radio connection between the UE and the network. The RRC reconfiguration, for example, functions to configure radio bearers, measurements, Scells or a Cell group following an RRC setup message.

Various messages can be dictated by the configuration of the RRCReconfiguration IE 202, including IE messages involved in SL relay such as those for a remote UE configuration, a relay UE configuration, commonly shared or SL control IEs, and those for path switching (e.g., a remote UE direct-to-indirect path switch). Thus, the main protocol utilized by the Uu interface is the RRC protocol to enable each base station to control the UE via an RRC configuration message 202.

For a relay UE, the SL-Configuration Dedicated NR (SL-ConfigDedicatedNR) IE 204 is provided within the RRCReconfiguration 202 to provide dedicated configurations for performing an SL dedicated configuration procedure for NR SL communication. The SL-ConfigDedicatedNR IE 204 includes IEs 210 associated with the relay UE 110-2 and the remote UE 110-2, respectively, including: an SL-RelayUE-Config IE that is configured with U2N relay UE discovery thresholds and hysteresis; an SL-RemoteUE-Config IE that includes a remote UE RSRP discovery threshold and relay selection thresholds for the remote UE 110-1; an SL-RLC-ChannelConfig IE that includes include a packet delay budget (PDB) budget for downlink (DL) in the PC5 hop 112 for the remote UE 110-1; an SL-RLC-ChannelConfig IE that includes a PDB budget for uplink (UL) in PC5 hop for relay UE 110-2; a discovery resource IE that can be commonly shared with non-relay SL UEs; and a communication resource IE that can be commonly shared with non-relay SL UEs.

For remote UE control a sidelink relay adaptation protocol (SRAP) configuration 206 is also provided directly under or within the RRCReconfiguration 202. On the U2N SL relay UE 110-2, the SRAP configuration is at the Uu interface 114-1 as an SRAP entity and a separate collocated SRAP entity at the PC5 interface 112. The SRAP configuration IE 206 includes an SL-L2RelayUE-Config-r17 IE that is an SRAP configuration for the relay UE 110-2 (including all remote UE L2 ID(s)) and an SL-L2RemoteUE-Config-r17 that includes an SRAP configuration for the remote UE 110-1, optionally with a cell radio network temporary identifier (C-RNTI) allocation. The SRAP indicates how to configure the SL relay and how to handle the forwarding and routing of the end-to-end traffic.

Additionally, within the RRCReconfiguration 202 is the master cell group 208 comprising a Uu relay RLC channel add/modification/release IE 212 and a reconfiguration with synchronization (ReconfigurationWithSync) IE 214. The Uu relay RCL channel IE 212 is configured only for a layer 2 (L2) relay UE 110-2, while the ReconfigurationWithSync IE 214 is utilized for a PCell change and specifies how the UE does a path switch configuration where the UE moves form a direct path to an indirection path via the SL-PathSwitchConfig IE 216.

Various aspects include enhancing RRC messages for the MP SL relay configured for the remote UE 110-1, as the relay UE 110-2 is mostly agnostic to SP or MP SL configuration. For example, a UE request message can be configured for the remote UE 110-1 to provide (e.g., as a new RRC message) to the base station 122, which can trigger the base station 122 to allow the remote UE 110-1 to use both indirect and direct paths.

Both a PCell change and a lack of a PCell change can be considered in the process flow for establishing an MP SL relay, as well as designing the MP SL relay based on abstract syntax notation (ASN.1). The PCell remains in the direct path 114-2 in both SP and in MP SL relay communication if the UE just adds the indirect path. However, if the remote UE 110-1 switches from an indirect path to a direct path, a PCell change can occur because in the SP (via SL relay) case, the origin of the PCell derives from the relay UE 110-2, particularly where the relay UE 110-2 is camped. In other words, the relay UE 110-2 serving cell is the PCell for the remote UE 110-1 and the relay UE 110-2 when single direct path is used. Then, when the remote UE 110-1 begins using both paths the PCell will be switched to the serving cell of UE 110-1 via direct path; a PCell change can be handled with an IE (e.g., ReconfigurationWithSync) to account for this change to the serving cell of the direct path.

Additionally, or alternatively, when the UP/CP traffic is migrated from an SP to an MP SL relay configuration, the handling of link failures is desired to mitigate data loss, especially with an indirect path in an MP change failure (e.g., where the relay UE is in an idle state and fails to reach the network) and timer/procedure operations. Additionally, or alternatively, RLM in the MP sidelink communications can be further enhanced for the remote UE to report any link failure via the indirect or direct path depending on whether only one path fails.

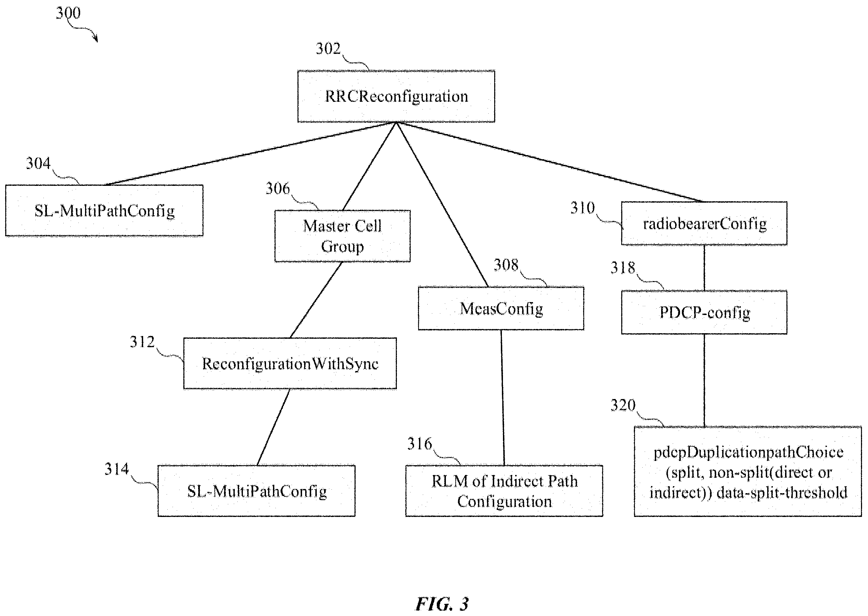

FIG. 3 illustrates another example of SL relay related information elements (IEs) 300 in different structures for a U2N relay to further account for an MP SL relay configuration and various aspects in association with the Remote UE 110-1. The RRCReconfiguration IE 302 comprises an SL-Multi-Path configuration (SL-MultiPathConfig) IE 304 or 314, either directly encapsulated within it or within the ReconfigurationWithSync 312 IE, which can further account for a PCell change. The RRCReconfiguration IE 302 further includes the master cell group 306 IE, similar to the master cell group IE 208 of FIG. 2, containing the ReconfigurationWithSync 312 with the SL-MultiPathConfig 314. The RRCReconfiguration IE 302 further includes a measurement configuration (MeasConfig) IE 308 containing an RLM of indirect path configuration 316. The RRCReconfiguration IE 302 further includes a radio bearer configuration (radiobearerConfig) 310 containing a PDCP configuration (PDCP-config) 318 that further indicates whether packet data duplication is utilized with a choice of a split bearer or a non-split bearer for the direct path 114-2 or the indirect path (112 and 114-1) for an MP SL relay; this can be provided in a pdcpDuplicationpathChoice IE 320 along with a corresponding data split threshold for applying a split bearer, for example. For those configurations which are similar as in the SP SL relay case, they are not depicted in FIG. 3. One of those configurations is the SRAP configuration for the remote UE. When a radio bearer is using the indirect path 112 and 114-1, an SRAP configuration (or SRAP-config) can be configured to correspondingly enable the remote UE 110-1 to use the SRAP over the PC5 hop or interface 112.

In an aspect, the PDCP parameters for a radio bearer configuration for the MP SL relay can be encapsulated in the PDCP-Config 318 with the pdcpDuplicationpathChoice IE 320. A signaling radio bearer (SRB) / data radio bearer (DRB) can be configured in a PDCP configuration for an MP SL relay. Each radio bearer can include whether the configuration is for the direct path 114-2 only, the indirect path 112 and 114-2 only, or both indirect and direct paths. When configuring both paths for a split-bearer configuration, one path can be designated as a primary path as the default path when data volume is low. Additionally, a data volume threshold can be indicated that corresponds with the split bearer for when to primarily use the primary / default path. The pdcpDuplicationpathChoice IE 320 can additionally indicate whether PDCP duplication is used or not for duplication of packets for a particular radio bearer.

Additionally, or alternatively, the RLM signaling includes the MeasConfig 308 of the RRCReconfiguration IE 302 to include measurement enhancements for an MP SL relay configuration. SL can be configured with a PC5 (HARQ failure) reporting configuration for the MP SL relay configuration via the RLM of indirect path configuration IE 316 of the MeasConfig 308. This IE 316 can be extended to a non-3GPP link (which is that scenario 2 included as discussed supra), if a generic metric is implemented, for example.

In an aspect, a MP configuration IE 304 or 314 (as SL-MultiPathConfig) can indicate whether the UE is configured with an MP SL configuration or not. Different alternatives are illustrated in FIG. 3 for considering the utilization of a SetupRelease ASN.1 syntax for configuring the indirect path only. In one aspect, the MP SL relay configuration can be indicated by the SL-MultiPathConfig IE 304 directly under or within the encapsulation of the RRCReconfiguration IE 302. Alternatively, or additionally, MP SL relay configuration can be configured with the SL-MultiPathConfig IE 314 as a part of the ReconfigurationWithSync IE 312.

The contents of the SL-MultiPathConfig IE 304 or 314 can include a Relay UE ID in the indirect path 112 and 114-1 to tell the UE what to use when identifying the relay UE 110-2, so the UE 110-1 knows what UE ID to use when reaching or communicating with the base station 122 indirectly. One indirect path could be supported, but the indirect path could be extended to have multiple relays or multiple relay UEs therein, for example. Additionally, a timer can be configured (e.g., as a new timer T4XX or other timer) for establishing the indirect path in the MP SL relay configuration scenario. The contents can further include a relay UE RRC state to tell the remote UE if the relay UE is in an RRC connected state, idle state or inactive state, for example.

SL IEs and SL relay IEs related to relay UE operations can be configured between the base station 122 and the relay UE 110-2 via the Uu interface 114-1. Rather than reusing an SL-PathSwitchConfig, as one option, even if ReconfigurationWithSync is configured, the SL-MultiPathConfig IE can be provided for MP configuration.

In one aspect, as discussed above, the SL-MultiPathConfig IE can be configured directly under the Reconfiguration IEs (RRCReconfiguration 302) as with SL-MultiPathConfig IE 304. An indirect path addition does not change the PCell. In addition, such indirect path addition is not a handover from the UE perspective. Therefore, configuring the SL-MultiPathConfig IE 304 directly under the RRCReconfiguration 302 for the MP SL relay is understandable by the UE because there is no indication or need for a ReconfigurationWithSync IE, which would require that the UE have a cell change (e.g., a PCell change). If there is no PCell change, however, where the UE already has a direct path, adding an indirect path for an MP SL configuration may not utilize the ReconfigurationWithSync IE 312, as there is no handover occurring.

Alternatively, or additionally, the SL-MultiPathConfig IE can be configured under or contained by the ReconfigurationWithSync IE 312 as with SL-MultiPathConfig IE 314. The ReconfigurationWithSync 312 is being used in relay path switch scenarios in SL relay for relay-related handover (even if PCell may not change). As such, the ReconfigurationWithSync 312 could still be utilized for the MP SL relay configuration whether the PCell changes or not. This would mean the ReconfigurationWithSync 312 IE or message would be included in the RRCReconfiguration 302 no matter whether there is a PCell change or not.

In an aspect, for MP SL relay configuration, transmission of the RRCReconfiguration 302 message is handled according to the configuration of the SRB1, either according to a more flexible configuration or more restrictive configuration with respect to the more flexible configuration. The more flexible configuration, for example, can include (as discussed supra) an indication of whether the SRB1 is configured to be transmitted for the direct path, the indirect path, or as split bearer, along with an indication of whether duplication is being utilized or not. Alternatively, or additionally, a more restrictive configuration of the SRB1 can be generated such that only the direct path is used by the NW and a relay UE to send the SRB1 message, especially where the interface 112 between the remote UE 110-1 and relay UE 110-2 can be configured as a 3GPP wireless SL interface or a non-3GPP interface as described. SRB1 and SRB2 can also have a same configuration as one another.

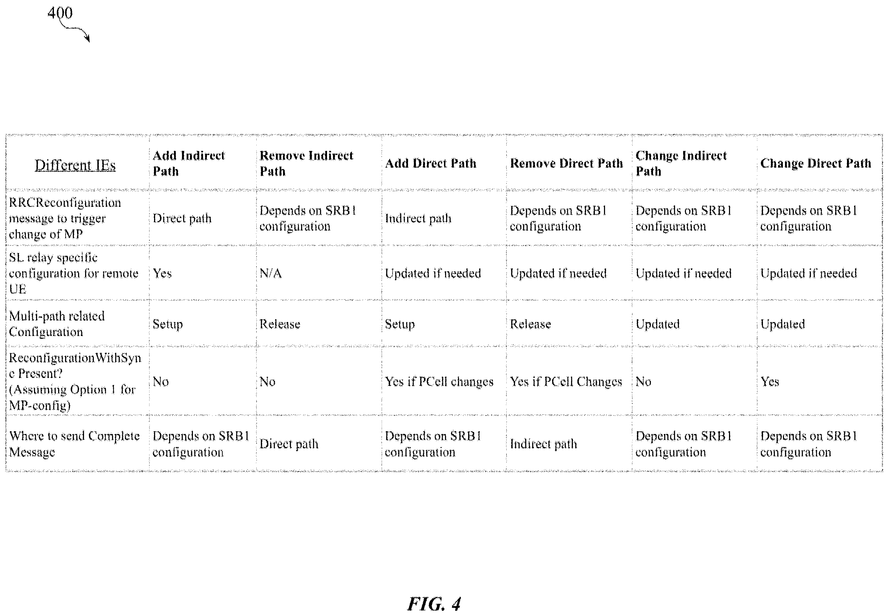

FIG. 4 illustrates an example of scenarios 400 for different IEs. These scenarios 400 include operations for adding an indirect path, removing an indirect path, adding a direct path, removing a direct path, changing an indirect path, or changing a direct path. The different IEs on the left, along with their related handling for where to send a complete message, includes the following: an RRCReconfiguration message (e.g., RRCReconfiguration 302) in order to trigger a change for MP SL relay configuration, an SL relay specific configuration IE for the remote UE 110-1, a multi-path related configuration IE (e.g., the SL-MultiPathConfig IE 304 or 314), and a reconfiguration with synchronization present (e.g., ReconfigurationWithSync 312) assuming the SL-MultiPathConfig IE 304 is being utilized over the SL-MultiPathConfig IE 314.

In particular, the RRCReconfiguration message (e.g., RRCReconfiguration 302) can be provided and used via a direct path when adding an indirect path, used depending on the SRB1 configuration for removing an indirect path, and used via the indirect path when adding a direct path. When removing a direct path, changing an indirect path or changing a direct path the RRCReconfiguration 302 can be used depending on the SRB1 configuration, respectively.

Utilizing an SL relay specific configuration IE for the remote UE 110-1 can depends on different scenarios. For example, an SL relay specific configuration IE can be used when adding an indirect path because it has to be added before the indirect path is established as the remote UE 110-1 only used the direct path and did not need to use any relay or be concerned with the UE relay side. When removing an indirect path this would not be utilized.

An MP related configuration as SL-MultiPathConfig 304 directly under RRCReconfiguration for setup message in the SL-MultiPathConfig 304 can be used for adding an indirect path or a direct path. If removing a path, then a release message in the SL-MultiPathConfig 304 can be used. When changing a direct or indirect path to another direct or indirect path, the SL-MultiPathConfig 304 can be updated.

ReconfigurationWithSync 312 is not utilized where there is no PCell change. ReconfigurationWithSync 312 then is used only for adding or removing a direct path if there is a PCell change occurring in conjunction.

The final part of the scenarios 400 as diagrammed illustrates where to send a complete message for finalizing the MP SL relay configuration. When sending a synchronization configuration message from the base station to the UE, the UE responds by sending a complete message as to whether it was successful in implementing the IEs for configuring the MP SL relay, which depends on whether the SRB1 is configured. However, when removing one path, there is only the other, alternative path by which to send it. In other situations, where to send the Complete Message depends on the SRB1 configuration, in which as discussed in aspects supra, the SRB/ DRB configuration in the PDCP configuration for each RB indicates its association for direct path only, indirect path only, or both with a split bearer according to various indicators.

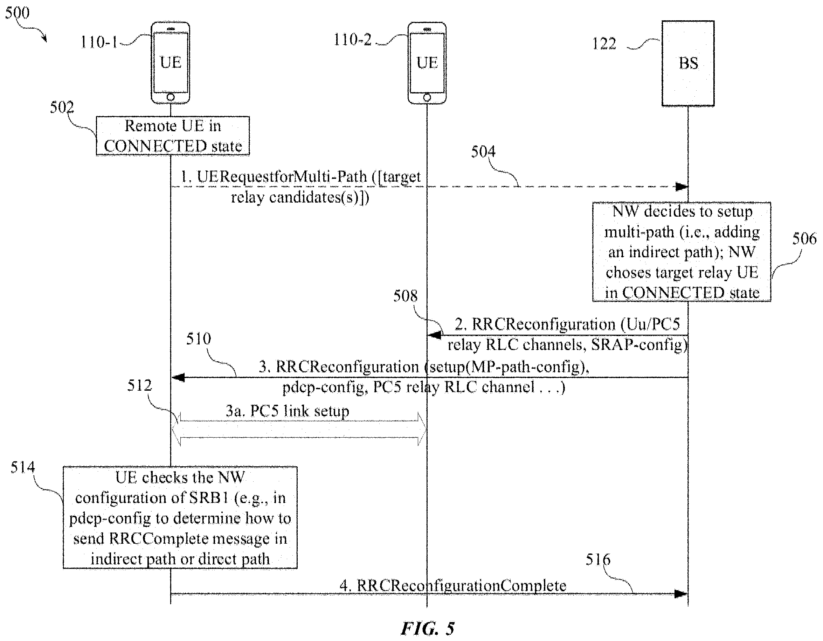

FIG. 5 illustrates an example of a signaling diagram 500 for an indirect path addition when the relay UE 110-2 is in an RRC_CONNECECTED state. The process flow initiates at 502 with the remote UE 110-1 being in a connected state, and not in an idle or inactive state. The remote UE 110-1 can initiate an indirect path addition by providing a UE request 504 to communicate over an indirect and direct path concurrently in an MP SL relay configuration. This UE request 504 message can include one or more target relay candidates for the relay UE 110-2. In response to receiving the UE request 504, at 506 the base station 122 or network NW decides to setup an MP relay configuration by adding an indirect path and selecting a target relay UE that is connected or in a connected state (e.g., either from the candidates or independently based on the NW implementation). The base station 122 provides an RRCReconfiguration (with Uu / PC5 relay RLC channels, and an SRAP-config) to the selected relay UE 110-2 at 508 for configuring an SRB and the indirect path 112 and 114-1 with the remote UE 110-1. Then the base station 122 provides the RRCReconfiguration (setup (MP-path-config 304 /314), pdcp-config 318, PC5 relay RLC channel 210) to the remote UE 110-1 at 510 for configuring the MP SL relay with the relay UE 110-2. Either signaling 508 or 510 can occur first, after the other or together, for example. At 512, the interface 112 is established between the remote and relay UEs through a PC5 link setup process. At 514, the UE checks the network configuration of SRB1 as provided in the pdcp-config IE message to determine the mechanism by which to send an RRC Complete message, in the indirect path or the direct path. At 516, the process finalizes with the remote UE 110-1 providing an RRC complete message (e.g., RRCReconfigurationComplete message) to the base station 122 to confirm a successful addition of the indirect path.

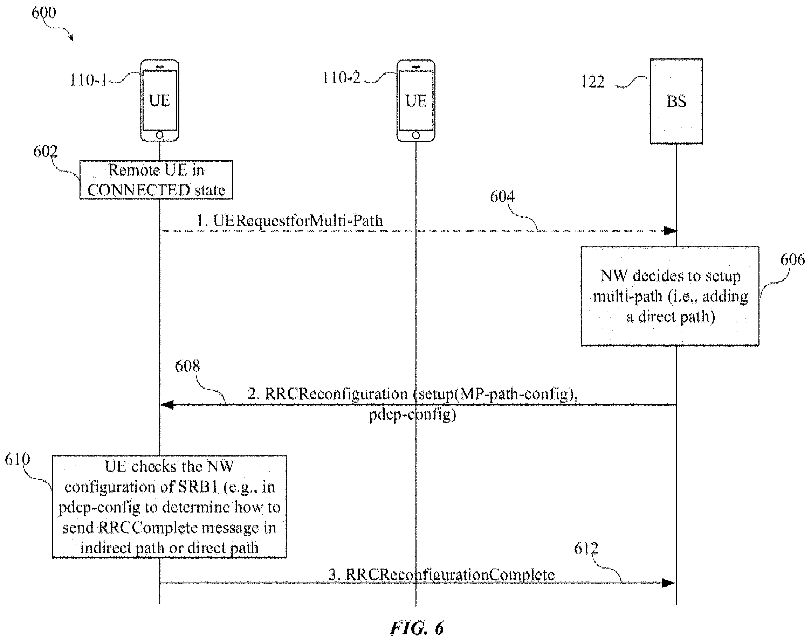

FIG. 6 illustrates an example of a signaling diagram 600 for a direct path addition. The remote UE 110-1 is in a connected state 602. The remote UE 110-1 provides a UE request 604 for the MP SL relay configuration to be configured. In response to receiving the UE request 604, at 606 the base station 122 or network NW decides to setup an MP relay configuration by adding a direct path 114-2. The base station 122 provides the RRCReconfiguration (setup (MP-path-config), pdcp-config) to the remote UE 110-1 at 608. Unlike adding an indirect path, no signaling necessarily goes through the relay UE 110-2. At 610, the UE 110-1 checks with the network configuration of SRB1 as provided in the pdcp-config to determine how to send an RRC Complete message, in the indirect path or the direct path. At 612, the process finalizes with the remote UE 110-1 providing an RRC complete message (e.g., RRCReconfigurationComplete message) to the base station 122 to confirm a successful addition of the direct path.

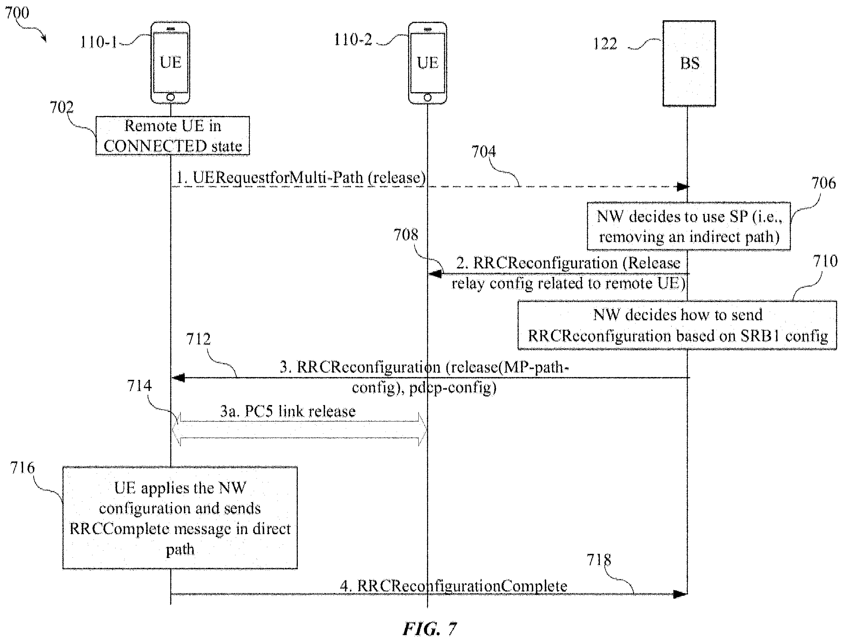

FIG. 7 illustrates an example of a signaling diagram 700 for an indirect path deletion or removal from the MP SL relay configuration. The remote UE 110-1 is in a connected state 702. The remote UE 110-1 provides a UE request for MP release (UERequestforMulti-Path (release)) 704. At 706, the base station 122 determines to use an SP configuration by removing an indirect path from the MP SL relay configuration in response to the UE request 704. The base station 122 provides an RRC reconfiguration message 708 (e.g., RRCReconfiguration 302 with release relay configuration related to the remote UE 110-2) to the relay UE 708 to trigger an update and release of the MP SL relay with the remote UE 110-1. The base station 122 then decides the mechanism by which to provide the RRC configuration message based on an SRB1 configuration. The base station 122 then provides an RRC reconfiguration message 712 (e.g., RRCReconfiguration 302 with release of the MP-Path-Config 304/314, and pdcp-config 318) to the remote UE 110-1. The remote UE 110-1 and relay UE 110-2 conduct a PC5 link release process 714. Then at 716 the remote UE 110-1 applies the network configuration and provides a complete message 718 (e.g., an RRCReconfigurationComplete message) in the direct path 130 to confirm a successful removal of the indirect path.

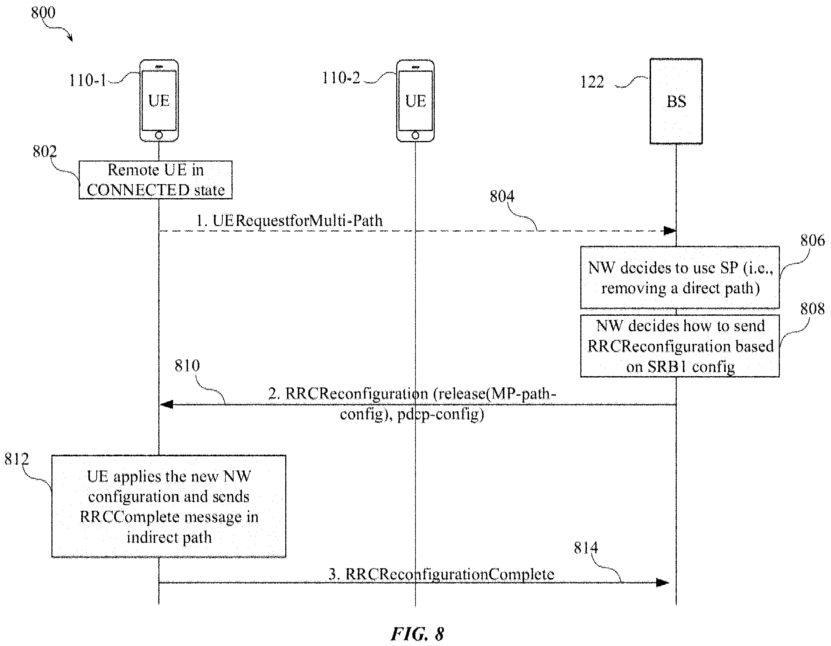

FIG. 8 illustrates an example of a signaling diagram 800 for a direct path deletion or removal from the MP SL relay configuration. The remote UE 110-1 is in a connected state 802. The remote UE 110-1 provides a UE request for MP release (UERequestforMulti-Path (release)) 804. At 806, the base station 122 determines to use an SP configuration by removing the direct path (e.g., 114-2) from the MP SL relay configuration in response to the UE request 804. The base station 122 then at 808 decides the mechanism by which to provide the RRC configuration message based on an SRB1 configuration. The base station 122 then provides an RRC reconfiguration message 810 (e.g., RRCReconfiguration 302 with release of the MP-Path-Config 304/314, and pdcp-config 318) to the remote UE 110-1. Then at 812 the remote UE 110-1 applies the network configuration and provides a complete message 814 (e.g., an RRCReconfigurationComplete message) in the direct path 130 to confirm a successful removal of the direct path.

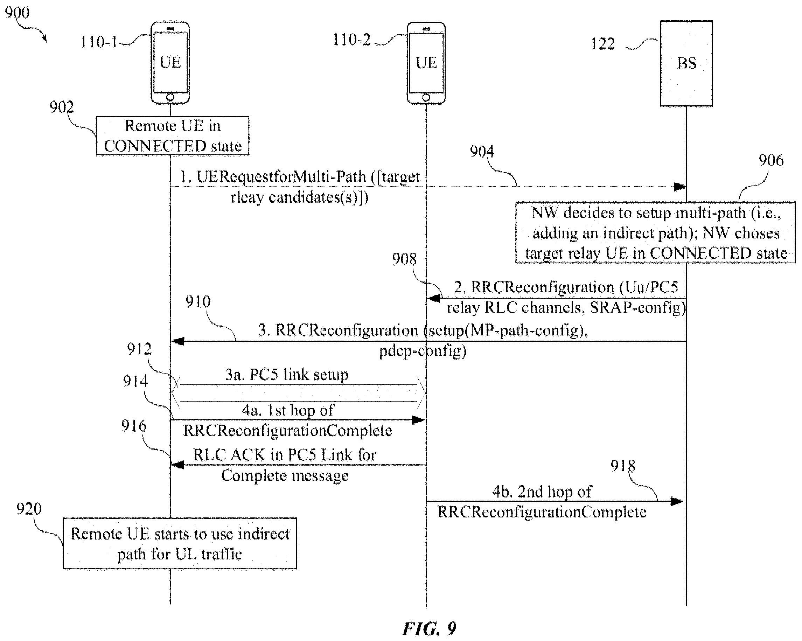

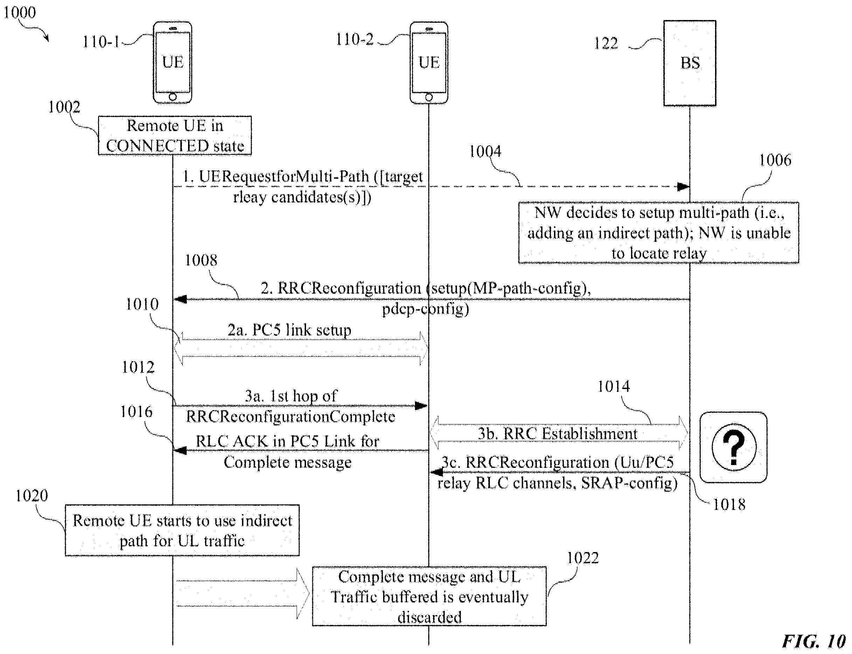

FIG. 9 illustrates an example of a signaling diagram 900 for the detail triggering condition for using indirect path for UL traffic during an indirect path addition procedure when the relay UE is in a connected state. In contrast, FIG. 10 illustrates an example of a signaling diagram 1000 for showing how this same triggering condition can be problemetic during an indirect path addition when the relay UE is not in a connected state, but in an IDLE/INACTIVE state. When UP/CP traffic is migrated from an SP / SP SL relay configuration to an MP SL relay configuration, the handling of link failures is desired to mitigate data loss, especially with an indirect path in an MP change failure (e.g., where the relay UE is in an idle state and fails to reach the network) and a timer operation condition is not being satisfied.

Referring to FIG. 9, illustrated is the signaling diagram 900, which is similar to the signaling diagram 500 of FIG. 5, although complete messages and its corresponding acknowledgement are additionally or alternatively provided from the remote UE 110-1 to the relay UE 110-2 in a first hop message and by the relay UE 110-2 to the remote UE 110-1 (e.g., an RLC acknowledgement (ACK) in PC5 Link for Complete message) respectively, and also to the base station 122 (e.g., a second hop of RRCReconfigurationComplete message).

The process flow initiates at 902 with the remote UE 110-1 being in a connected state rather than an IDLE/INACTIVE state. The remote UE 110-1 can initiate an indirect path addition by providing a UE request 904 to communicate over an indirect and direct path concurrently in an MP SL relay configuration. The UE request 904 message can include one or more target relay candidates for selecting a relay UE 110-2. In response to receiving the UE request 904, at 906 the base station 122 or NW decides to setup an MP relay configuration by adding an indirect path and selecting a target relay UE that is in a connected state (e.g., either from the candidates or independently based on the NW). The base station 122 then provides an RRCReconfiguration (with Uu / PC5 relay RLC channels, and an SRAP-config) to the selected relay UE 110-2 at 908 for configuring an SRB and the indirect path 112 and 114-1 with the remote UE 110-1. Then the base station 122 provides the RRCReconfiguration (setup (MP-path-config 304 /314), pdcp-config 318) to the remote UE 110-1 at 910 for configuring the MP SL relay with the relay UE 110-2. Either signaling 908 or 910 can occur first, after the other or together, for example. The interface 112 is established between the remote and relay UEs through a PC5 link setup process 912. The remote UE 110-1 provides a complete message as an RRCReconfiguration complete message in a first hop complete message 914 to the relay UE 110-2. The relay UE 110-2 in response to the message 914 indicates that it is connected by providing the RLC ACK in PC5 Link for complete message 916, which can satisfy a timer condition of the remote UE 110-1. Then the relay UE 110-2 can further provide a complete message as an RRCReconfiguration complete message in a second hop complete message 918 to the base station 122. At 920, the remote UE 110-1 begins to use the indirect path for UL traffic in an MP SL relay.

FIG. 10 illustrates an example of a signaling diagram 1000 for showing how this same triggering condition depicted in Figure 9 can be problemetic during an indirect path addition procedure when the relay UE 110-2 is in an IDLE/INACTIVE state and not connected, unable to relay signaling between the remote UE 110-1 and the base station122. The process flow initiates at 1002 with the remote UE 110-1 being in a connected state rather than an IDLE/INACTIVE state. The remote UE 110-1 can initiate an indirect path addition by providing a UE request 1004 to communicate over an indirect and direct path concurrently in an MP SL relay configuration. The UE request 1004 message can include one or more target relay candidates for selecting a relay UE 110-2. In response to receiving the UE request 1004, at 1006 the base station 122 decides to setup an MP relay configuration by adding an indirect path, but the base station 122 is not able to locate a relay in the connected state. Thus, as the signal process flow diagram 1000 proceeds, the RRC establishment between the base station 122 and potential relay UE 110-2 is brought into question, lacking any confirmation or confirming indication of an MP SL relay is ready to support an indirect path.

For example, the base station 122 provides the RRCReconfiguration (setup (MP-path-config 304 /314), pdcp-config 318) 1008 to the remote UE 110-1 for configuring the MP SL relay, albeit without assurance of an established Uu line to a second hop or interface 114-1. The interface 112 is established between the remote and relay UEs through a PC5 link setup process 1010. The remote UE 110-1 provides a complete message as an RRCReconfiguration complete message in a first hop complete message 1012 to the relay UE 110-2. Then even though the remote UE may receive an RLC ACK in PC5 Link for complete message 1016, an RRC establishment 1014 may or may not have completed, and the base station 122 may or may not have been able to provide an RRCReconfiguration (with Uu / PC5 relay RLC channels, and an SRAP-config) to the relay UE 110-2 at 1018. Consequently, when the remote UE 110-1 starts to use the indirect path for UL traffic at 1020, the relay UE 110-2 can not necessarily further provide the complete message (e.g., an RRCReconfiguration complete message) in a second hop to the base station 122. Then at 1022, the complete message and the UL traffic eventually is discarded, or is timed out. The whole relay communication is thus put on hold because the RRC configuration 1018 does not successfully come from the base station 122. The relay UE 110-2 thus has no configuration to know how to resolve traffic with base station 122. Because there is no way for traffic to reach the base station 122 when there is something wrong with the Uu link between relay UE 110-2 and the base station 122. This problem can be compounded because the buffered UL traffic buffered here could have been sent via a direct path without necessarily any problem, if the indirect path is not put in use by remote UE in such a hasty manner.

The remote UE 110-1 can include a path switch timer (e.g., a T420 timer) that stops depending on the PC5 link setup 1010, where the stop condition of the timer can occur upon successfully sending an RRC Reconfiguration Complete message (i.e., where the PC5 RLC acknowledge is received from the target relay). Along with the timer stop, a path change is deemed successful and traffic will start using the new path. However, following such a protocol strictly may produce difficulty without reconfiguring the stop condition. In particular, the stop condition can be changed given that the complete message may not to be transmitted via the indirect path in an MP SL relay configuration. A solution is to change the timer stop condition to correspond with a PC5 link establishment success; thus, instead of the remote UE 110-1 waiting for the PC5 RLC ACK to begin signaling over the indirect path, as long as the PC5 is setup at 912, the remote UE 110-1 can send the complete message 914 and the timer of the remote UE 110-1 can stop after the relay UE 110-2 sends the PC5 ACK or RLC ACK in PC5 Link to the remote UE 110-1.

Another issue arises when the remote UE 110-1 decides to apply the MP-configuration and PDCP-config, some UL traffic will start to be delivered to the relay UE 110-2 via PC5 hop 112 of the indirect path. However, the relay UE 110-2 may not be ready to deliver them to the base station 122, even if PC5 link is ready. The second Uu hop of the relay may not be ready and the relay UE 110-2 fails to reach the gNB. This becomes a pressing issue for using an IDLE/INACTIVE relay UE.

Recovery from this HO failure could rely on PDCP level mechanism, which could be slow and costly. This scenario could be bad for configuring an MP SL relay because traffic could be still delivered in the direct path without issue, in the absence of the hasty adoption of new indirect path.

In an aspect, the remote UE 110-1 can be configured to delay or postpone the application of PDCP-config 318 received at 1008 until a new signaling is received from the base station 122 or the relay UE 110-2 to confirm that the indirect path is ready to be used. As such, the remote UE 110-1 can be configured to delay traffic migration via the indirect path, until after one or more of the following occurs: the base station 122 sends a Uu RRC message to confirm that the direct path 114-2 is ready to be used, or the relay UE 110-2 sends a PC5 RRC message to notify the remote UE 110-1 that the Uu hop of indirect path is established or ready to be used. These aspects can involve the base station 122 to inform the remote UE 110-1 of the RRC state of the target relay UE in an earlier RRCReconfiguration message (which is used to convey Path change/addition command), for example.

Additionally, or alternatively, the relay UE 110-2 could hold the RLC layer ACK of the RRCReconfigurationComplete message until it establishes the Uu hop successfully. This may involve an RLC entity behavior change, which is not automatic. Additionally, or alternatively, the remote UE 110-1 could delay using an indirect path until it receives DL traffic (e.g., an SRB/DRB) configured to use the indirect path. However, the base station 122 may not have only DL traffic to send in the indirect path.

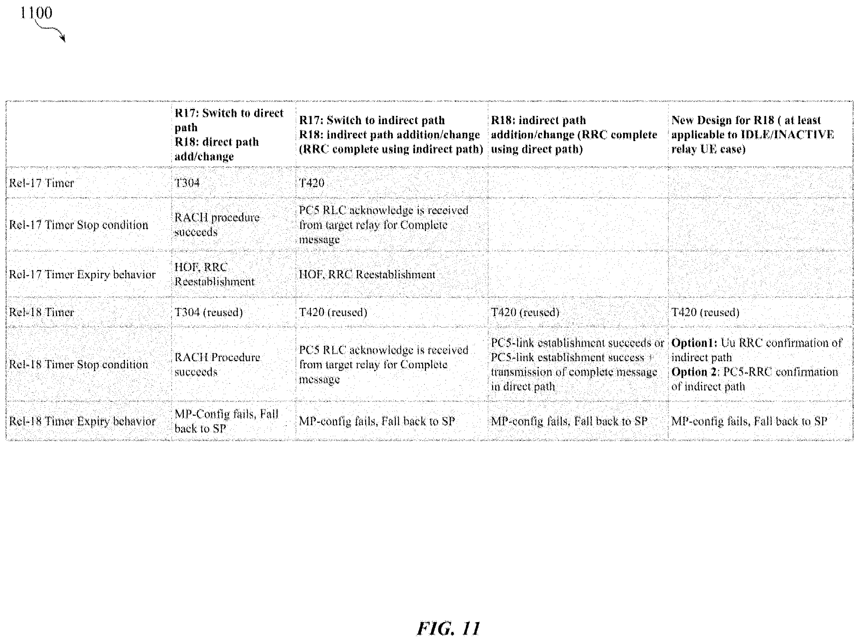

FIG. 11 illustrates a table of timer stop conditions and timer expiry behaviors involved with monitoring for a failure of a path addition or path change when the relay UE 110-2 is in an idle or inactive state. Various operations are indicated across the top row that are paired with various criteria along the far right column. The top row includes operations that include a switch to a direct path, a switch to an indirect path using the RRC complete message with the indirect path, and indirect path addition or change using the RRC complete message with the direct path, and lastly for Release 18 applicable to an IDLE/INACTIVE relay UE. The starting condition of a timer in each operation can be a reception of an RRC HO command. In addition, for each path change failure that is detected, the remote UE 110-1 can also opt to fallback to a previous MP configuration instead of the SP.

For each of these operations, a legacy timer such as the T304 can be used for switching to a direct path or a direct path addition or change. The timer stop condition is the success of a random access channel (RACH) procedure. The timer expiry behavior for Rel-17 is a handover failure (HOF) or an RRC reestablishment. For Release 18 a new timer expiry behavior can be operated so that when the MP configuration path fails, the remote UE performs a fallback operation by reverting to an SP state, such that the UE continues to use the indirect path because of a failure of the MP SL relay configuration being established; this timer expiry behavior can be utilized for each of the operations as illustrated in the bottom row, including for a switch to an indirect path using the RRC complete message with the indirect path or the direct path, and lastly for an IDLE/INACTIVE relay UE.

In aspect, in an operation for an indirect path addition/change (RRC complete using direct path), the timer stop condition can be configured so that the RRC complete message uses a PC5 RLC acknowledgment (PC5 RLC ACK). However, if the indirect path addition / change is using an RRC complete using the direct path, there is no ACK necessarily coming from the relay UE 110-2, and so the condition can be changed to utilize a PC5-link establishment succeeds or PC5-link establishment success plus a transmission of a complete message in the direct path. Thus, there is no reliance on the PC5 RLC acknowledgment message.

Additionally, or alternatively, for a new configuration for R18 where the relay UE is an idle/ inactive relay UE case the timer T420 can be reused. In an aspect, receiving the Uu RRC confirmation of the indirect path being ready for use is used as the timer stop condition for the remote UE 110-1. Alternatively, receiving a PC5-RRC confirmation of the indirect path being established and ready to use can be the timer stop condition. In either of these alternatives, whenever the MP configuration fails, the UE can fall back to SP.

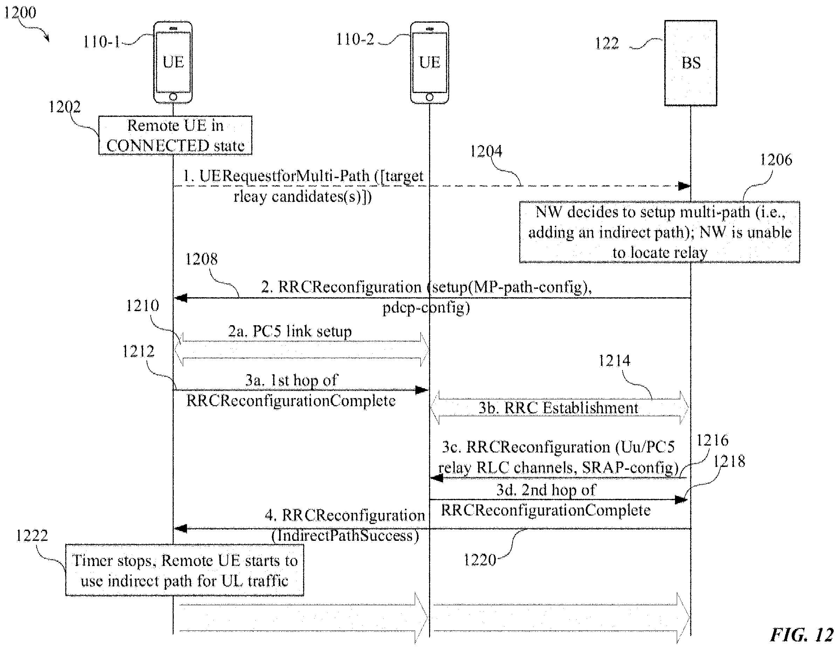

FIG. 12 illustrates an example signaling diagram 1200 of MP SL relay using an inactive / idle relay UE. The process flow initiates at 1202 with the remote UE 110-1 being in a connected state. The remote UE 110-1 can initiate an indirect path addition by providing a UE request 1204 to communicate over an indirect and direct path concurrently in an MP SL relay configuration. The UE request 1204 can include one or more target relay candidates for a relay UE 110-2. In response to receiving the UE request 1204, at 1206 the base station 122 decides to setup an MP relay configuration by adding an indirect path, but the base station 122 is not able to locate a relay in the connected state, either from the candidates provided or itself. Thus, as the signal process flow diagram 1200 proceeds, the RRC establishment between the base station 122 and potential relay UE 110-2 is brought into question. The base station 122 provides the RRCReconfiguration (setup (MP-path-config 304 /314), pdcp-config 318) 1208 to the remote UE 110-1. The interface 112 is established between the remote and relay UEs through a PC5 link setup process 1210, but without any assurance as of yet for an established Uu line in a second hop between a relay UE 110-2 and the base station 122. The remote UE 110-1 further provides a complete message as an RRCReconfiguration complete message in a first hop complete message 1212 to the relay UE 110-2.

Afterwards rather than waiting to receive an RLC ACK in PC5 Link for complete message, the remote UE 110-1 postpones any use of the indirect path until an RRC establishment 1214 completes, and the base station 122 provides an RRCReconfiguration (with Uu / PC5 relay RLC channels, and an SRAP-config) to the relay UE 110-2 at signaling 1216. Then the relay UE 110-2 can further provide a complete message as an RRCReconfiguration complete message in a second hop complete message 1218 to the base station 122. Then the gNB or base station 122 provides a success message such as an RRCReconfiguration(IndirectPathSuccess) message 1220, confirming the establishment of the second Uu hop with an actively connected relay UE 110-2. At 1222, the remote UE 110-1 begins to use the indirect path for UL traffic in an MP SL relay without having the issues associated with potentially an IDLE / INACTIVE relay UE where UL data and traffic may be discarded by gambling on the connected status of the relay UE.

Thus, instead of waiting the using the legacy PC5 RRC ACK at 1012 (or signaling 3a) as the condition to stop the timer, the remote UE 110-1 can be configured to wait for the RRC establishment 1014 to happen in the second hop at 3c or 1018 between the relay UE 110-2 and the gNB or base station 122; while also waiting for a success message of such from the base station 122 (e.g., RRCReconfiguration(IndirectPathSuccess) message).

In particular, at 1214 thru 1218 (or, steps 3b, 3c, and 3d) for RRC establishment, the base station 122 configures the relay UE 110-2 with corresponding configurations at 3b and 3c. Then the relay UE 110-2 can forward this message to base station 122, and further forward in a downlink the RRCReconfiguration(Indirect path success) message 1220 to the remote UE. At this time, the success message can trigger a timer stop at the remote UE 110-1 for the remote UE 110-1 to start using the indirect path for UL traffic. In addition, after receiving this confirmation of success message the remote UE could send an ACK message again to the gNB or base station 122. Thus, the remote UE 110-1 is configured to use the reception of the success message to trigger the timer stop and begin using the indirect path, where it could send another confirmation / ACK message back to the base station 122, or a new UL traffic through the indirect path.

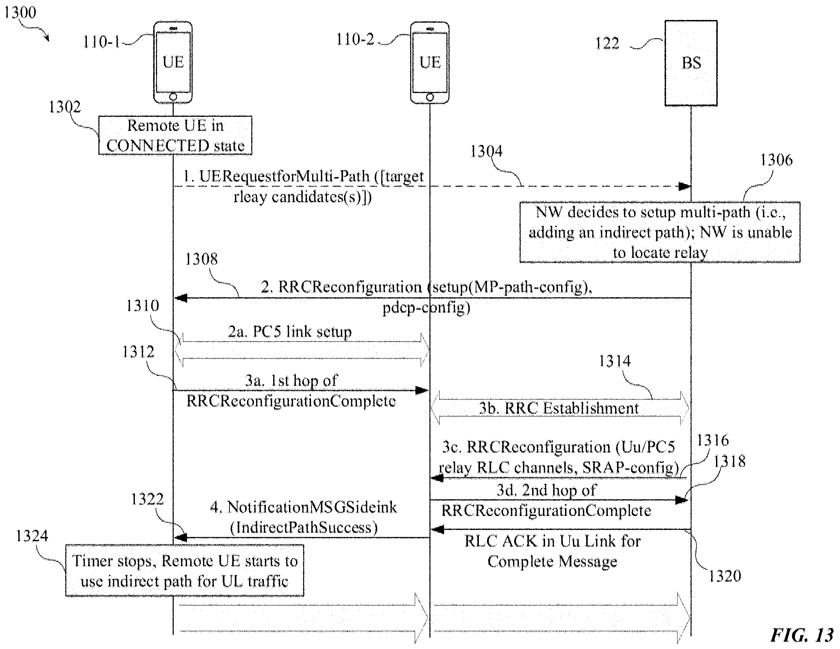

FIG. 13 illustrates an example signaling diagram 1300 of MP SL relay using an inactive / idle relay UE. The process flow initiates at 1302 with the remote UE 110-1 being in a connected state. The following processes or signaling 1304 thru 1318 are similar to the processes or signaling 1204 thru 1218 of FIG. 12. Rather than the RRC success message 1220 being used to trigger a timer stop condition and enable the remote UE 110-1 to utilize the newly established indirect path in the MP SL relay, the UE 110-1 receives a notification of success message 1322 (e.g., NotificationMsgSidelink (IndirectPathSuccess)) directly from the relay UE 110-2. Thus, after step 3d (e.g., 2 nd hop of RRCReconfiguration Complete 1318) an RLC ACK in Uu link for complete message 1320 is delivered from the relay UE to gNB or base station 122 as an indication of successful establishment of the MP SL relay with the second Uu hop. Then the relay UE 110-2 can tell the remote UE 110-1 that at this time the indirect path is OK for traffic use by sending a success message to the remote UE 110-1. In response to receiving the notification of success from the relay UE 110-2, a timer stop condition is triggered, the timer stops, and the remote UE 110-1 can start to use the indirect path for UL traffic.

Additionally, or alternatively, other aspects can be configured for RLM in the MP sidelink communications can be further enhanced for the remote UE to report any link failure via the indirect or direct path depending on whether only one path fails. Generally, only a consecutive number for HARQ discontinuous transmission (DTX) is monitored (e.g., as numConsecutiveDTX), which can be maintained for each PC5-RRC link connection. PC5 radio link failure (RLF) is triggered when a consecutive number of HARQ DTX exceeds the RRC-configured threshold (sl-MaxNumConsecutiveDTX). DTX in general, is a situation where the base station finds no HARQ information at an expected frequency resource. The base station calculates the energy at the expected uplink frequency resource to decide if there is energy or a DTX. When the energy at the expected frequency resource is below a certain threshold, base station physical layer indicates a DTX for that HARQ.

In an aspect, SL RLM for the MP configuration can be enhanced by allowing the remote UE 110-1 in MP to monitor and report more HARQ statistics via the direct path 114-2. The remote UE 110-1, for example, can operate to monitor the indirect path 112 and 114-1 because this path is used in sidelink with the direct path. The remote UE 110-1 can monitor the indirect path with additional statists can and report the results via the direct path 114-2. The justification is to allow the base station 122 to adjust the MP configuration timelier, and respond to radio conditions of SL quicker.

The additional statistics to be monitored and reported by the remote UE 110-1 for the MP configuration can include HARQ related statistics and RLC related statistics. The HARQ related statistics can include: a number of consecutive HARQ NACKs, a number of total HARQ NACKs, a number of consecutive HARQ DTX [not receiving any ACKs or NACKs just no response], or a number of total HARQ DTX. Additionally, or alternatively, these HARQ related statististics for SL RLM in MP can be organized in a data set or list as a HARQ-infoList to detail an outcome of each HARQ. Additionally, or alternatively, the remote UE 110-1 can report a number of RLC failures, as well as one or more thresholds associated with any one or more of the statististics added to trigger the reporting in a meas-config 308. Thus, when any of these additional statistics or parameters are quite small, below a threshold or otherwise satisfying an associated threshold, there is no reason to report, but upon that number reaching the threshold a report could be generated. When the report of RLM statistics is triggered, the remote UE 110-1 in MP can also report current sidelink channel busy ratio (SL-CBR) and PC5 reference signal received power (RSRP) or a signal power together with HARQ info to assist the base station in determining a potential RLF.

In an aspect, when the remote UE 110-1 is configured to monitor and provide a path failure reporting in MP, the direct and indirect path can be used. The remote UE 110-1 can always report one path failure in the alternative path, if a non-split SRB1 is still configured via the alternative path. This means that if an SRB1 is still available in the indirect path and the direct path fails, the UE can report the failure. However, when the SRB 1 is completely failed such that the path carrying the SRB 1 path has failed, the UE would not be allowed or configured to report this because the path reporting is associated with the SRB1 has failed. Then rather than a path failure, the event could be called a RLF and other protocols implemented.

The remote UE 110-1 can also report a path addition / change failure when the UE 110-1 is forced to fallback to an original SP or MP configuration. In general, the UE 110-1 is enable to report SL RLF to the base station or gNB via SidelinkUElnformationNR IE. However, this configuration may be too narrow for a R18 MP case. As such, a different IE could be configured to report an SL RLF in MP by the UE 110-1 configuring a new MultiPathFailureReport RRC message to the base station 122, for example. The MP path failure report RRC message can include the following information: a. an indication which path fails, (optionally including the target relay UE ID of relay UE 110-2 to identify which indirect path); and b. a new cause values for path failure to indicate the potential reasons for failure. For example, cause values for the indirect path can include a PC5 link-failure, relay Uu-failure, non3gpplink-failure, or an integrity check failure, each of which can provide some detailed information to indicate why the indirect path may have failed). Cause values for the direct path, for example, can include: a RACH-failure, or an RLC-failure. Further, for a path addition/change failure, cause values, for example, can include: an indirect path addition fail (indirectpath-add-fail), a direct path addition fail (direct-path-add-fail), an indirect path change fail (indirectpath-change-fail), or a direct path change fail (directpath-change-fail), each of which can indicate reasons why this addition / change path may fail). Additionally, or alternatively, additional measurements (e.g., SL CBR, PC5 RSRP), and can also be made for MP.

In another aspect, the remote UE 110-1 can utilize a sidelink UE information IE (SidelinkUElnforamtionNR) for SL path failure reporting in MP. The contents can be similar or the same as the new MultiPathFailiureReport RRC message discussed above. The UE 110-1 can determine which message to use, either one or both in deciding which option to be used for reporting path failure.

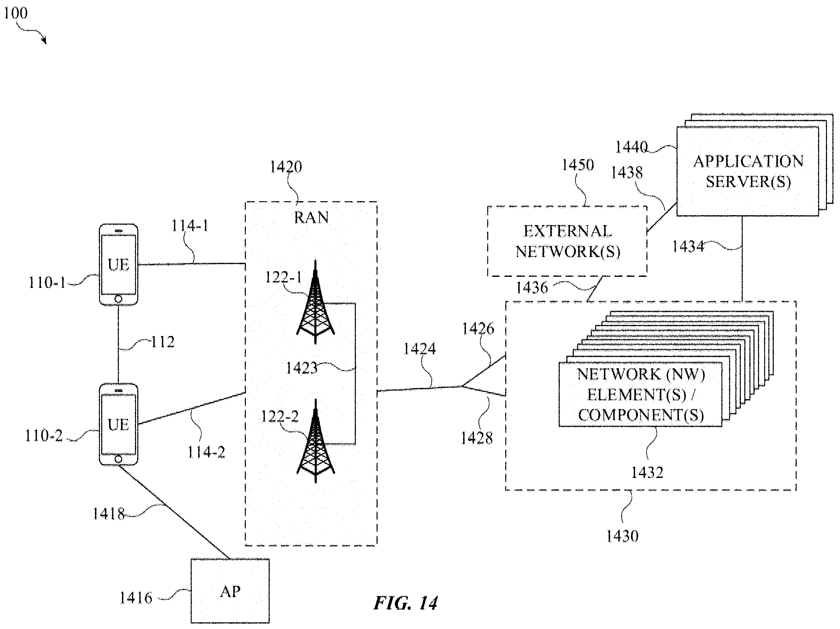

FIG. 14 is an example network 1400 according to one or more implementations described herein. Example network 100 can include UEs 110-1, 110-2, etc. (referred to collectively as "UEs 110" and individually as "UE 110"), a radio access network (RAN) 1420, a core network (CN) 1430, application servers 1440, and external networks 1450.

UEs 110 can communicate and establish a connection with (be communicatively coupled to) RAN 1420, which can involve one or more wireless channels 114-1 and 114-2, each of which can comprise a physical communications interface / layer. In some implementations, a UE can be configured with dual connectivity (DC) as a multi-radio access technology (multi-RAT) or multi-radio dual connectivity (MR-DC), where a multiple receive and transmit (Rx / Tx) capable UE can use resources provided by different network nodes or base stations 122 (e.g., 122-1 and 122-2) that can be connected via non-ideal backhaul (e.g., where one network node provides NR access and the other network node provides either E-UTRA for LTE or NR access for 5G). In such a scenario, one network node can operate as a master node (MN) and the other as the secondary node (SN). The MN and SN can be connected via a network interface, and at least the MN can be connected to the CN 1430. Additionally, at least one of the MN or the SN can be operated with shared spectrum channel access, and functions specified for UE 110 can be used for an integrated access and backhaul mobile termination (IAB-MT). Similar for UE 110, the IAB-MT can access the network using either one network node or using two different nodes with enhanced dual connectivity (EN-DC) architectures, new radio dual connectivity (NR-DC) architectures, or other direct connectivity such as an SL communication channel as an SL interface 112.

In some implementations, a base station (as described herein) can be an example of network node 122. As shown, UE 110 can additionally, or alternatively, connect to access point (AP) 1416 via connection interface 1418, which can include an air interface enabling UE 110 to communicatively couple with AP 1416. AP 1416 can comprise a wireless local area network (WLAN), WLAN node, WLAN termination point, etc. The connection 1418 can comprise a local wireless connection, such as a connection consistent with any IEEE 702.11 protocol, and AP 1416 can comprise a wireless fidelity (Wi-Fi^{®}) router or other AP. AP 1416 could be also connected to another network (e.g., the Internet) without connecting to RAN 1420 or CN 1430.

RAN 1420 can also include one or more RAN nodes 122-1 and 122-2 (referred to collectively as RAN nodes 122, and individually as RAN node 122) that enable channels 114-1 and 114-2 to be established between UEs 110 and RAN 1420. RAN nodes 122 can include network access points configured to provide radio baseband functions for data or voice connectivity between users and the network based on one or more of the communication technologies described herein (e.g., 2G, 3G, 4G, 5G, WiFi, etc.). As examples therefore, a RAN node can be an E-UTRAN Node B (e.g., an enhanced Node B, eNodeB, eNB, 4G base station, etc.), a next generation base station (e.g., a 5G base station, NR base station, next generation eNBs (gNB), etc.). RAN nodes 122 can include a roadside unit (RSU), a transmission reception point (TRxP or TRP), and one or more other types of ground stations (e.g., terrestrial access points). In some scenarios, RAN node 122 can be a dedicated physical device, such as a macrocell base station, or a low power (LP) base station for providing femtocells, picocells or other like having smaller coverage areas, smaller user capacity, or higher bandwidth compared to macrocells. As described below, in some implementations, satellites 160 can operate as bases stations (e.g., RAN nodes 122) with respect to UEs 110. As such, references herein to a base station, RAN node 122, etc., can involve implementations where the base station, RAN node 122, etc., is a terrestrial network node and also to implementation where the base station, RAN node 122, etc., is a non-terrestrial network node.

Some or all of RAN nodes 122 can be implemented as one or more software entities running on server computers as part of a virtual network, which can be referred to as a centralized RAN (CRAN) or a virtual baseband unit pool (vBBUP). In these implementations, the CRAN or vBBUP can implement a RAN function split, such as a packet data convergence protocol (PDCP) split wherein radio resource control (RRC) and PDCP layers can be operated by the CRAN / vBBUP and other Layer 2 (L2) protocol entities can be operated by individual RAN nodes 122; a media access control (MAC) / physical (PHY) layer split wherein RRC, PDCP, radio link control (RLC), and MAC layers can be operated by the CRAN/vBBUP and the PHY layer can be operated by individual RAN nodes 122; or a "lower PHY" split wherein RRC, PDCP, RLC, MAC layers and upper portions of the PHY layer can be operated by the CRAN/vBBUP and lower portions of the PHY layer can be operated by individual RAN nodes 122. This virtualized framework can allow freed-up processor cores of RAN nodes 122 to perform or execute other virtualized applications, for example.

In some implementations, an individual RAN node 122 can represent individual gNB-distributed units (DUs) connected to a gNB-control unit (CU) via individual F1 interfaces. In such implementations, the gNB-DUs can include one or more remote radio heads or radio frequency (RF) front end modules (RFEMs), and the gNB-CU can be operated by a server (not shown) located in RAN 1420 or by a server pool (e.g., a group of servers configured to share resources) in a similar manner as the CRAN/vBBUP. Additionally, or alternatively, one or more of RAN nodes 122 can be next generation eNBs (i.e., gNBs) that can provide evolved universal terrestrial radio access (E-UTRA) user plane and control plane protocol terminations toward UEs 110, and that can be connected to a 5G core network (5GC) 1430 via a Next Generation (NG) interface 1424.

Any of the RAN nodes 122 can terminate an air interface protocol and can be the first point of contact for UEs 110. In some implementations, any of the RAN nodes 122 can fulfill various logical functions for the RAN 1420 including, but not limited to, radio network controller (RNC) functions such as radio bearer management, uplink and downlink dynamic radio resource management and data packet scheduling, and mobility management. UEs 110 can be configured to communicate using orthogonal frequency-division multiplexing (OFDM) communication signals with each other or with any of the RAN nodes 122 over a multicarrier communication channel in accordance with various communication techniques, such as, but not limited to, an OFDMA communication technique (e.g., for downlink communications) or a single carrier frequency-division multiple access (SC-FDMA) communication technique (e.g., for uplink and ProSe or sidelink (SL) communications), although the scope of such implementations cannot be limited in this regard. The OFDM signals can comprise a plurality of orthogonal subcarriers.

A physical downlink shared channel (PDSCH) can carry user data and higher layer signaling to UEs 110. The physical downlink control channel (PDCCH) can carry information about the transport format and resource allocations related to the PDSCH channel, among other things. The PDCCH can also inform UEs 110 about the transport format, resource allocation, and hybrid automatic repeat request (HARQ) information related to the uplink shared channel. Typically, downlink scheduling (e.g., assigning control and shared channel resource blocks to UE 110-2 within a cell) can be performed at any of the RAN nodes 122 based on channel quality information fed back from any of UEs 110. The downlink resource assignment information can be sent on the PDCCH used for (e.g., assigned to) each of UEs 110.

The PDCCH uses control channel elements (CCEs) to convey the control information, wherein a number of CCEs (e.g., 6 or other number) can consists of a resource element groups (REGs), where a REG is defined as a physical resource block (PRB) in an OFDM symbol. Before being mapped to resource elements, the PDCCH complex-valued symbols can first be organized into quadruplets, which can then be permuted using a sub-block interleaver for rate matching, for example. Each PDCCH can be transmitted using one or more of these CCEs, where each CCE can correspond to nine sets of four physical resource elements known as REGs. Four quadrature phase shift keying (QPSK) symbols can be mapped to each REG. The PDCCH can be transmitted using one or more CCEs, depending on the size of the DCI and the channel condition. There can be four or more different PDCCH formats with different numbers of CCEs (e.g., aggregation level, L=1, 2, 4, 8, or 16).

The RAN nodes 122 may be configured to communicate with one another via interface 1423. In implementations where the system is an LTE system, interface 1423 may be an X2 interface. In LTE networks, X2 and S1 interface are defined as the interfaces between RAN nodes and between RAN and Core Network. 5G may operate in two modes as non-standalone and standalone mode. For non-standalone operation the specification defines the extension for S1 and X2 interfaces as for standalone operation as X2 / Xn for the interface between RAN nodes 122 and S1 / NG for the interface 1424 between RAN 120 and CN 1430. The interface 1424 may be defined between two or more RAN nodes 122 (e.g., two or more eNBs / gNBs or a combination thereof) that connect to evolved packet core (EPC), the CN 1430, or between eNBs connecting to an EPC. In some implementations, the X2 / Xn interface may include an X2 / Xn user plane interface (X2-U / Xn-U) and an X2 control plane interface (X2-C / Xn-C). The X2-U / Xn-U may provide flow control mechanisms for user data packets transferred over the X2 / Xn interface and may be used to communicate information about the delivery of user data between eNBs or gNBs. For example, the X2-U / Xn-U may provide specific sequence number information for user data transferred from a master eNB (MeNB) to a secondary eNB (SeNB); information about successful in sequence delivery of PDCP packet data units (PDUs) to a UE 110 from an SeNB for user data; information of PDCP PDUs that were not delivered to a UE 110; information about a current minimum desired buffer size at the SeNB for transmitting to the UE user data; and the like. The X2-C / Xn-C may provide intra-LTE access mobility functionality (e.g., including context transfers from source to target eNBs, user plane transport control, etc.), load management functionality, and inter-cell interference coordination functionality.

Alternatively, or additionally, RAN 1420 can be also connected (e.g., communicatively coupled) to CN 1430 via a Next Generation (NG) interface as interface 1424. The NG interface 1424 can be split into two parts, a Next Generation (NG) user plane (NG-U) interface 1426, which carries traffic data between the RAN nodes 122 and a User Plane Function (UPF), and the S1 control plane (NG-C) interface 1428, which is a signaling interface between the RAN nodes 122 and Access and Mobility Management Functions (AMFs).

CN 1430 can comprise a plurality of network elements 1432, which are configured to offer various data and telecommunications services to customers/subscribers (e.g., users of UEs 110) who are connected to the CN 1430 via the RAN 1420. In some implementations, CN 1430 can include an evolved packet core (EPC), a 5G CN, and/or one or more additional or alternative types of CNs. The components of the CN 1430 can be implemented in one physical node or separate physical nodes including components to read and execute instructions from a machine-readable or computer-readable medium (e.g., a non-transitory machine-readable storage medium).

As shown, CN 1430, application servers 1440, and external networks 1450 can be connected to one another via interfaces 1434, 1436, and 1438, which can include IP network interfaces. Application servers 1440 can include one or more server devices or network elements (e.g., virtual network functions (VNFs) offering applications that use IP bearer resources with CM 1430 (e.g., universal mobile telecommunications system packet services (UMTS PS) domain, LTE PS data services, etc.). Application servers 1440 can also, or alternatively, be configured to support one or more communication services (e.g., voice over IP (VolP sessions, push-to-talk (PTT) sessions, group communication sessions, social networking services, etc.) for UEs 110 via the CN 1430. Similarly, external networks 1450 can include one or more of a variety of networks, including the Internet, thereby providing the mobile communication network and UEs 110 of the network access to a variety of additional services, information, interconnectivity, and other network features.

In an aspect, the UEs 110-1 and 110-2 can operate by configuring RRC messages and signal paths for an MP SL relay. The remote UE 110-1 can operate to be the initiator of the MP SL relay configuration. When the UP / CP traffic is migrated from an SP to an MP SL relay configuration, the handling of link failures and the mitigating of data loss can improve QoS or QoE. RLM in the MP sidelink communications can further be configured and path failure reporting enhanced for further improving QoE. For example, processing circuitry, comprising at least one memory, of the remote UE 110-1 can be configured to: initiate a U2N relay configuration that includes an indirect path 112 and 114-1 through a relay UE 110-1 to the NW 122 and a direct path 114 to the NW based on an MP configuration IE, wherein the U2N relay configuration comprises an MP SL relay for communicating over the indirect path and the direct path concurrently or simultaneously. The processing circuitry is further configured for establishing the indirect path via the relay UE 110-2 and transmitting a complete message to the NW to provide a confirmation of a successful application of an MP SL relay configuration. Transmission of traffic can then be provided via the processing circuitry of the UE 110-1 over an indirect path and a direct path, for example.

In an aspect, signaling for the MP SL relay configuration with the remote UE can be configured such that a multi-path configuration information element (IE) indicates whether the remote UE is configured with MP SL relay, an SP SL relay or a single direct path. For example, an SL-MultiPathConfig IE can be provided under an RRC reconfiguration (RRCReconfiguration) IE to establish MP SL relay communications for a remote UE. Alternatively, or additionally, the RRCReconfiguration IE can be provided as a part of a reconfiguration with synchronization (ReconfigurationWithSync) IE, which is configured under a master cell group IE. Alternatively, or additionally, various measurement enhancements can be triggered for radio link monitoring under the Measurement configuration IE of the RRCReconfiguration IE, for example. Alternatively, or additionally, a packet data convergence protocol (PDCP) configuration (PDCP-config) IE can provide a signaling radio bearer (SRB) / data radio bearer (DRB) configuration to signal or trigger a status for SP or MP SL communications.

In an aspect, a timer stop condition can be changed given that a "complete" message may not be transmitted via the indirect path in an MP SL relay configuration. To account for such a possibility, the remote UE can operate to postpone an application of the PDCP configuration for providing a complete message via the indirect path or the direct path of the MP configuration until a confirmation signaling is received from either the base station (e.g., gNB) or a relay UE in order to confirm that the direct path is established for use.

In an aspect, the remote UE can be configured to further monitor and report hybrid automatic repeat request (HARQ) statistics via the direct path in an MP SL relay. For example, HARQ statistics can include a number of consecutive HARQ NACKs, a number of total HARQ NACKs, a number of consecutive HARQ DTXs, a number of total HARQ DTXs, a number of radio link control (RLC) failures, or a combination of the HARQ statistics organized in a HARQ-infoList to detail each HARQ outcome. The reporting can be triggered based on a threshold associated with a HARQ statistic to trigger the reporting, as in a measurement configuration IE (e.g., a meas-config), for example.

Enhancements can further include path failure reporting by the remote UE. The remote UE can be configured to report a failure of one path of the MP SL relay, in a second other path, either the direct path or the indirect path, in response to a non-split SRB still being configured for the second other path. Alternatively or additionally, the UE can report a path addition / change failure in response to a fallback to an original or previous SP or MP SL relay configuration based on at least one of: a Multi-Path Failure report RRC message (Multi-PathFailureReport RRC) message or a sidelink UE information NR (SidelinkUEInformationNR) message.

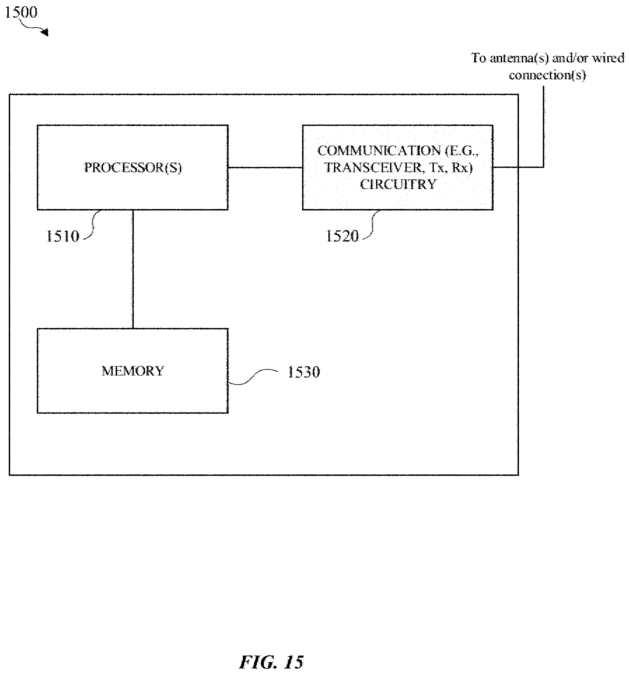

Referring to FIG. 15, illustrated is a block diagram of a UE device 110 (e.g., UE 110-1 or 110-2) or other network device / component (e.g., V-UE / P-UE, IoT, gNB, eNB, base station 122 or other participating network entity / component) 1500. The device 1500 includes one or more processors 1510 (e.g., one or more baseband processors) comprising processing circuitry and associated interface(s), transceiver circuitry 1520 (e.g., comprising RF circuitry, which can comprise transmitter circuitry (e.g., associated with one or more transmit chains) and/or receiver circuitry (e.g., associated with one or more receive chains) that can employ common circuit elements, distinct circuit elements, or a combination thereof), and a memory 1530 (which can comprise any of a variety of storage mediums and can store instructions and/or data associated with one or more of processor(s) 1510 or transceiver circuitry 1520).

Memory 1530 (as well as other memory components discussed herein, e.g., memory, data storage, or the like) can comprise one or more machine-readable medium / media including instructions that, when performed by a machine or component herein cause the machine or other device to perform acts of a method, an apparatus or system for communication using multiple communication technologies according to aspects, embodiments and examples described herein. It is to be understood that aspects described herein can be implemented by hardware, software, firmware, or any combination thereof. When implemented in software, functions can be stored on or transmitted over as one or more instructions or code on a computer-readable medium (e.g., the memory described herein or other storage device). Computer-readable media includes both computer storage media and communication media including any medium that facilitates transfer of a computer program from one place to another. A storage media or a computer readable storage device can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or other tangible and/or non-transitory medium, that can be used to carry or store desired information or executable instructions. Any connection can be also termed a computer-readable medium.

Memory 1530 can include executable instructions, and be integrated in, or communicatively coupled to, processor or processing circuitry 1510. The executable instructions of the memory 1530 can cause processing circuitry 1510 to receive / process the instructions to initiate a U2U relay path through a first relay UE to a destination UE by providing a direct communication request to the first relay UE. A U2U relay reselection can be performed to a second relay UE in response to a trigger condition. The trigger condition can be based on at least one of: a measurement of a first or second channel link to the first relay UE being below a (pre)configured threshold, a detection of a radio link failure (RLF) on the first or second channel link, a notification based on a channel link between the first relay UE and the destination UE, or the source UE and the first relay UE, or a reception of a release message. Then the U2U relay can further be established to the destination UE through the second relay UE, as well as other aspects described in this disclosure.

Memory 1530 can include executable instructions, and be integrated in, or communicatively coupled to, processor or processing circuitry 1510. The executable instructions of the memory 1530 can cause processing circuitry 1510 to receive / transmit communications for an MP SL relay. The processing circuitry 310 can process the communication by initiating a U2N relay configuration that includes an indirect path through a relay UE 110-2 to the NW 122 and a direct path to the NW 122 based on an MP configuration IE by providing a UE request where the device is a remote UE 110-1, wherein the U2N relay configuration comprises an MP SL relay for communicating over the indirect path and the direct path concurrently or simultaneously. The processing circuitry 1510 can further establish the indirect path via the relay UE 110-2 and transmit an RRC complete message to the NW to provide a confirmation of a successful application of an MP SL relay configuration. Traffic communication can then be provided over the indirect path and/or the direct path.

In an aspect, the processing circuitry 1510 can receive a UE request for a U2N relay configuration that includes an indirect path through the relay UE to a remote UE 110-1 and a direct path to the remote UE 110-2, where the device is a base station or NW device, wherein the U2N relay configuration comprises an MP SL relay for communicating over the indirect path and the direct path concurrently. The processing circuitry 1510 with memory 1530 can operate to establish the MP SL relay by adding the indirect path or the direct path by providing an RRC reconfiguration message to the relay UE or to the remote UE. An RRC configuration complete message can then be received from the remote UE confirming an establishment of the MP SL relay.

The device 1500 is configured to process, perform, generate, communicate or cause execution of any one or more combined aspects described herein or in association with any of the FIGs. 1 thru 14.

While the methods described within this disclosure are illustrated in and described herein as a series of acts or events, it will be appreciated that the illustrated ordering of such acts or events are not to be interpreted in a limiting sense. For example, some acts can occur in different orders and/or concurrently with other acts or events apart from those illustrated and/or described herein. In addition, not all illustrated acts can be required to implement one or more aspects or embodiments of the description herein. Further, one or more of the acts depicted herein can be carried out in one or more separate acts and/or phases. Reference can be made to the figures described above for ease of description. However, the methods are not limited to any particular embodiment, aspect or example provided within this disclosure and can be applied to any of the systems / devices / components disclosed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

The present disclosure is described with reference to attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone, etc.) with a processing device. By way of illustration, an application running on a server and the server can be also a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising." Additionally, in situations wherein one or more numbered items are discussed (e.g., a "first X", a "second X", etc.), in general the one or more numbered items can be distinct, or they can be the same, although in some situations the context can indicate that they are distinct or that they are the same.

As used herein, the term "circuitry" can refer to, be part of, or include an Application Specific Integrated Circuit (ASIC), an electronic circuit, a processor (shared, dedicated, or group), or associated memory (shared, dedicated, or group) operably coupled to the circuitry that execute one or more software or firmware programs, a combinational logic circuit, or other suitable hardware components that provide the described functionality. In some embodiments, the circuitry can be implemented in, or functions associated with the circuitry can be implemented by, one or more software or firmware modules. In some embodiments, circuitry can include logic, at least partially operable in hardware.

As it is employed in the subject specification, the term "processor" can refer to substantially any computing processing unit or device including, but not limited to including, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit, a digital signal processor, a field programmable gate array, a programmable logic controller, a complex programmable logic device, a discrete gate or transistor logic, discrete hardware components, or any combination thereof designed to perform the functions and/or processes described herein. Processors can exploit nano-scale architectures such as, but not limited to, molecular and quantum-dot based transistors, switches and gates, in order to optimize space usage or enhance performance of mobile devices. A processor can also be implemented as a combination of computing processing units.

Examples (embodiments) can include subject matter such as a method, means for performing acts or blocks of the method, at least one machine-readable medium including instructions that, when performed by a machine (e.g., a processor with memory, an application-specific integrated circuit (ASIC), a field programmable gate array (FPGA), or the like) cause the machine to perform acts of the method or of an apparatus or system for concurrent communication using multiple communication technologies according to embodiments and examples described herein.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical disks (e.g., compact disk (CD), digital versatile disk (DVD), etc.), smart cards, and flash memory devices (e.g., EPROM, card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data. Additionally, a computer program product can include a computer readable medium having one or more instructions or codes operable to cause a computer to perform functions described herein.

Communications media embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

An exemplary storage medium can be coupled to processor, such that processor can read information from, and write information to, storage medium. In the alternative, storage medium can be integral to processor. Further, in some aspects, processor and storage medium can reside in an ASIC. Additionally, ASIC can reside in a user terminal. In the alternative, processor and storage medium can reside as discrete components in a user terminal. Additionally, in some aspects, the processes and/or actions of a method or algorithm can reside as one or any combination or set of codes and/or instructions on a machine-readable medium and/or computer readable medium, which can be incorporated into a computer program product.

In this regard, while the disclosed subject matter has been described in connection with various embodiments and corresponding Figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

In particular regard to the various functions performed by the above described components (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations of the disclosure. In addition, while a particular feature can have been disclosed with respect to only one of several implementations, such feature can be combined with one or more other features of the other implementations as can be desired and advantageous for any given or particular application.

## Claims

1. A User Equipment (UE) comprising:
a memory;
processing circuitry, coupled to the memory, configured to cause the UE to:
transmit, to a base station, a request for a UE to network (U2N) relay configuration;
receive, from the base station, a U2N relay configuration, wherein the U2N relay configuration configures the UE with a multi-path (MP) sidelink (SL) relay for communicating over an indirect path through a relay UE and a direct path to a network concurrently, wherein the U2N relay configuration comprises a packet data convergence protocol (PDCP) configuration (PDCP-config);
transmit a complete message to the network to provide a confirmation of a successful application of the MP SL relay; and
postpone an application of the PDCP-config for the indirect path and delay providing traffic communication over the indirect path until receiving a confirmation signaling that the indirect path is ready for use.

2. The UE of claim 1, wherein the confirmation signaling indicates that a Uu hop of the indirect path is established for communication based on a Uu radio resource control (RRC) message from the base station or a PC5-RRC message from the relay UE.

3. The UE of any of claims 1-2, wherein the processing circuitry is further configured to cause the UE to:
receive a release message to release the MP SL relay and switch to a single path (SP).

4. The UE of any of claims 1-3, wherein the the U2N relay configuration is comprised in at least one of: a radio resource control (RRC) reconfiguration (RRCReconfiguration) information element (IE) to establish the MP SL relay, a packet data convergence protocol (PDCP) configuration (PDCP-config) IE that provides a signaling radio bearer (SRB) / data radio bearer (DRB) configuration, or a reporting configuration for a PC5 link, wherein the SRB / DRB configuration is configured for at least one of: a split, a non-split, or a split bearer for determining whether to split based on a threshold, or whether packet duplication is used.

5. The UE of any of claims 1-4, wherein the processing circuitry is further configured to cause the UE to:
receive an MP configuration IE with an indication of whether to configure the MP SL relay directly within a radio resource (RRC) configuration (RRCReconfiguration) IE or as a part of a reconfiguration with synchronization (ReconfigurationWithSync) IE.

6. The UE of any of claims 1-5, wherein the U2N relay configuration comprises an SL multi-path configuration (SL-MultipathConfig) IE, a relay UE ID of the relay UE in the indirect path, a timer for establishing the MP SL relay, and an RRC state of the relay UE.

7. The UE of any of claims 1-6, wherein the processing circuitry is further configured to cause the UE to:
determine whether to provide the complete message as an RRC complete message via the indirect path or the direct path based on an SRB configuration or based on whether the indirect path or direct path is being released.

8. The UE of any of claims 1-7, wherein the processing circuitry is further configured to cause the UE to:
delay providing the traffic communication over the indirect path until receiving a Uu RRC message, a PC5-RRC message indicating that a Uu hop of the indirect path is established, or an indication of a connected state of the relay UE.

9. The UE of any of claims 1-8, wherein the processing circuitry is further configured to cause the UE to:
receive, from the relay UE, an indication that the relay UE delays transmitting a radio link control (RLC) acknowledgment (ACK) associated with forwarding the complete message until the relay UE establishes a Uu hop of the indirect path.

10. The UE of any of claims 1-9, wherein the processing circuitry is further configured to cause the UE to:
in response to a timer expiry of a timer for configuring the MP SL relay, fall back to a single path SL relay configuration that configures one of the indirect path or the direct path.

11. The UE of any of claims 1-10, wherein the processing circuitry is further configured to cause the UE to:
stop a timer for an addition or a change of the indirect path based on receiving a PC5 link establishment success message or receiving the PC5 link establishment success message and a transmission of the complete message in the direct path.

12. The UE of any of claims 1-11, wherein the processing circuitry is further configured to cause the UE to:
stop a timer for establishing the indirect path based on receiving an RRC confirmation message of success of the indirect path from the network, or a PC5-RRC confirmation message of success of the indirect path from the relay UE.

13. The UE of any of claims 1-12, wherein the processing circuitry is further configured to cause the UE to:
monitor and report in the MP SL relay one or more hybrid automatic repeat request (HARQ) statistics via the direct path.

14. A base station comprising:
a memory;
processing circuitry, coupled to the memory, configured to, when executing instructions stored in the memory, cause the base station to:
receive, from a remote user equpment, UE, a request for a UE to network (U2N) relay configuration, wherein the U2N relay configuration configures a multi-path (MP) sidelink (SL) relay for communicating concurrently over an indirect path through a relay UE and a direct path between the remote UE and the base station;
transmit a radio resource control (RRC) reconfiguration message that includes information for establishing the MP SL relay by adding the indirect path or the direct path;
receive, from the remote UE, an RRC configuration complete message, wherein the RRC reconfiguration message to the relay UE comprises a Uu / PC5 relay radio link control (RLC) channels and a sidelink relay adaptation protocol (SRAP) configuration, and wherein the RRC configuration message to the remote UE comprises an MP path configuration and a packet data convergence protocol (PDCP) configuration (PDCP-config); and
provide, to the remote UE, a confirmation signaling indicating that the indirect path is ready for use, the confirmation signaling indicating that a Uu hop of the indirect path between the relay UE and the base station is established for communication; and
cause the remote UE to postpone an application of the PDCP-config for the indirect path and delay providing traffic communication over the indirect path until receiving the confirmation signaling.

15. The base station of claim 14, wherein the U2N relay configuration configures the relay UE to delay transmitting a RLC acknowledgment, ACK, associated with forwarding the complete message until the relay UE establishes the Uu hop.

## Patentansprüche

1. Benutzereinrichtung (UE), umfassend:
einen Speicher;
eine mit dem Speicher gekoppelte Verarbeitungsschaltung, die konfiguriert ist, um die UE zu veranlassen zum:
Übertragen, an eine Basisstation, einer Anforderung für eine UE-an-Netzwerk-Relaiskonfiguration (U2N-Relaiskonfiguration);
Empfangen, von der Basisstation, einer U2N-Relaiskonfiguration, wobei die U2N-Relaiskonfiguration die UE mit einem Mehrpfad-Sidelink-Relais (MP-SL-Relais) zum gleichzeitigen Kommunizieren an ein Netzwerk über einen indirekten Pfad durch eine Relais-UE und einen direkten Pfad konfiguriert, wobei die U2N-Relaiskonfiguration eine Packet-Data-Convergence-Protocol-Konfiguration (PDCP-config) umfasst;
Übertragen einer Abschlussnachricht an das Netzwerk, um eine Bestätigung einer erfolgreichen Anwendung des MP-SL-Relais bereitzustellen; und
Zurückstellen einer Anwendung der PDCP-config für den indirekten Pfad und Verzögern eines Bereitstellens von Verkehrskommunikation über den indirekten Pfad, bis eine Bestätigungssignalisierung empfangen wird, dass der indirekte Pfad zur Verwendung bereit ist.

2. UE nach Anspruch 1, wobei die Bestätigungssignalisierung angibt, dass ein Uu-Hop des indirekten Pfads für eine Kommunikation basierend auf einer Uu-Radio-Resource-Control-Nachricht (RRC-Nachricht) von der Basisstation oder einer PC5-RRC-Nachricht von der Relais-UE hergestellt ist.

3. UE nach einem der Ansprüche 1 bis 2, wobei die Verarbeitungsschaltung ferner konfiguriert ist, um die UE zu veranlassen zum:
Empfangen einer Freigabenachricht, um das MP-SL-Relais freizugeben und auf einen Einzelpfad (SP) umzuschalten.

4. UE nach einem der Ansprüche 1 bis 3, wobei die U2N-Relaiskonfiguration in mindestens einem umfasst ist von: einem Radio-Resource-Control-Rekonfiguration-Informationselement (RRCReconfiguration-IE), um das MP-SL-Relais herzustellen, einem Packet-Data-Convergence-Protocol-Konfigurations-IE (PDCP-config-IE), das eine Signalisierungsfunkträger-/ Datenfunkträger-Konfiguration (SRB-/ DRB-Konfiguration) bereitstellt, oder einer Meldekonfiguration für eine PC5-Verknüpfung, wobei die SRB-/ DRB-Konfiguration für mindestens einen konfiguriert ist von: einem Split-Träger, einem Non-Split-Träger oder einem Split-Träger zum Bestimmen, ob basierend auf einem Schwellenwert gesplittet wird, oder ob eine Paketduplizierung verwendet wird.

5. UE nach einem der Ansprüche 1 bis 4, wobei die Verarbeitungsschaltung ferner konfiguriert ist, um die UE zu veranlassen zum:
Empfangen eines MP-Konfigurations-IE mit einer Angabe, ob das MP-SL-Relais direkt innerhalb eines Radio-Resource-Control-Konfigurations-IE (RRCReconfiguration-IE) oder als Teil eines IE einer Rekonfiguration mit Synchronisation (ReconfigurationWithSync) konfiguriert wird.

6. UE nach einem der Ansprüche 1 bis 5, wobei die U2N-Relaiskonfiguration ein SL-Mehrpfadkonfigurations-IE (SL-MultipathConfig-IE), eine Relais-UE-ID der Relais-UE in dem indirekten Pfad, einen Timer zum Herstellen des MP-SL-Relais und einen RRC-Zustand der Relais-UE umfasst.

7. UE nach einem der Ansprüche 1 bis 6, wobei die Verarbeitungsschaltung ferner konfiguriert ist, um die UE zu veranlassen zum:
Bestimmen, ob die Abschlussnachricht als eine RRC-Abschlussnachricht über den indirekten Pfad oder den direkten Pfad bereitgestellt wird, basierend auf einer SRB-Konfiguration oder basierend darauf, ob der indirekte Pfad oder direkte Pfad freigegeben wird.

8. UE nach einem der Ansprüche 1 bis 7, wobei die Verarbeitungsschaltung ferner konfiguriert ist, um die UE zu veranlassen zum:
Verzögern des Bereitstellens der Verkehrskommunikation über den indirekten Pfad bis zum Empfangen einer Uu-RRC-Nachricht, einer PC5-RRC-Nachricht, die angibt, dass ein Uu-Hop des indirekten Pfads hergestellt ist, oder einer Angabe eines verbundenen Zustands der Relais-UE.

9. UE nach einem der Ansprüche 1 bis 8, wobei die Verarbeitungsschaltung ferner konfiguriert ist, um die UE zu veranlassen zum:
Empfangen, von der Relais-UE, einer Angabe, dass die Relais-UE das Übertragen einer Radio-Link Control-Quittung (RLC-ACK), die einem Weiterleiten der Abschlussnachricht zugeordnet ist, verzögert, bis die Relais-UE einen Uu-Hop des indirekten Pfads herstellt.

10. UE nach einem der Ansprüche 1 bis 9, wobei die Verarbeitungsschaltung ferner konfiguriert ist, um die UE zu veranlassen zum:
als Reaktion auf einen Timerablauf eines Timers zum Konfigurieren des MP-SL-Relais, Zurückfallen auf eine Einzelpfad-SL-Relaiskonfiguration, die einen von dem indirekten Pfad oder dem direkten Pfad konfiguriert.

11. UE nach einem der Ansprüche 1 bis 10, wobei die Verarbeitungsschaltung ferner konfiguriert ist, um die UE zu veranlassen zum:
Stoppen eines Timers für eine Hinzufügung oder eine Änderung des indirekten Pfads basierend auf dem Empfangen einer PC5-Verknüpfungsherstellungserfolgsnachricht oder dem Empfangen der PC5-Verknüpfungsherstellungserfolgsnachricht und einer Übertragung der Abschlussnachricht in dem direkten Pfad.

12. UE nach einem der Ansprüche 1 bis 11, wobei die Verarbeitungsschaltung ferner konfiguriert ist, um die UE zu veranlassen zum:
Stoppen eines Timers zum Herstellen des indirekten Pfads basierend auf dem Empfangen einer RRC-Bestätigungsnachricht eines Erfolgs des indirekten Pfads von dem Netzwerk oder einer PC5-RRC-Bestätigungsnachricht des Erfolgs des indirekten Pfads von der Relais-UE.

13. UE nach einem der Ansprüche 1 bis 12, wobei die Verarbeitungsschaltung ferner konfiguriert ist, um die UE zu veranlassen zum:
Überwachen und Melden, in dem MP-SL-Relais, einer oder mehrerer Hybrid-Automatic-Repeat-Request-Statistiken (HARQ-Statistiken) über den direkten Pfad.

14. Basisstation, umfassend:
einen Speicher;
eine mit dem Speicher gekoppelte Verarbeitungsschaltung, die, wenn sie in dem Speicher gespeicherte Anweisungen ausführt, konfiguriert ist, um die Basisstation zu veranlassen zum:
Empfangen, von einer entfernten Benutzereinrichtung, UE, einer Anforderung für eine UE-an-Netzwerk-Relaiskonfiguration (U2N-Relaiskonfiguration), wobei die U2N-Relaiskonfiguration ein Mehrpfad-Sidelink-Relais (MP-SL-Relais) zum gleichzeitigen Kommunizieren über einen indirekten Pfad durch eine Relais-UE und einen direkten Pfad zwischen der entfernten UE und der Basisstation konfiguriert;
Übertragen einer Radio-Resource-Control-Rekonfigurationsnachricht (RRC-Rekonfigurationsnachricht), die Informationen zum Herstellen des MP-SL-Relais durch Hinzufügen des indirekten Pfads oder des direkten Pfads einschließt;
Empfangen, von der entfernten UE, einer RRC-Konfigurationsabschlussnachricht, wobei die RRC-Rekonfigurationsnachricht an die Relais-UE Uu-/ PC5-Relais-Radio-Link-Control-Kanäle (RLC-Kanäle) und eine Sidelink-Relais-Adaptation-Protocol-Konfiguration (SRAP-Konfiguration) umfasst und wobei die RRC-Konfigurationsnachricht an die entfernte UE eine MP-Pfadkonfiguration und eine Packet-Data-Convergence-Protocol-Konfiguration (PDCP-config) umfasst; und
Bereitstellen, an die entfernte UE, einer Bestätigungssignalisierung, die angibt, dass der indirekte Pfad zur Verwendung bereit ist, wobei die Bestätigungssignalisierung angibt, dass ein Uu-Hop des indirekten Pfads zwischen der Relais-UE und der Basisstation für die Kommunikation hergestellt ist; und
Veranlassen der entfernten UE, eine Anwendung der PDCP-config für den indirekten Pfad zurückzustellen und das Bereitstellen von Verkehrskommunikation über den indirekten Pfad bis zu dem Empfangen der Bestätigungssignalisierung zu verzögern.

15. Basisstation nach Anspruch 14, wobei die U2N-Relaiskonfiguration die Relais-UE konfiguriert, um das Übertragen einer RLC-Quittung, ACK, die dem Weiterleiten der Abschlussnachricht zugeordnet ist, zu verzögern, bis die Relais-UE den Uu-Hop herstellt.

## Revendications

1. Équipement utilisateur (UE) comprenant :
une mémoire ;
un système de circuits de traitement, couplé à la mémoire, configuré pour amener l'UE à :
transmettre, à une station de base, une demande pour une configuration de relais d'UE vers réseau (U2N) ;
recevoir, en provenance de la station de base, une configuration de relais U2N, dans lequel la configuration de relais U2N configure l'UE avec un relais de liaison latérale (SL) à chemins multiples (MP) permettant de communiquer sur un chemin indirect par le biais d'un UE relais et un chemin direct vers un réseau concomitamment, dans lequel la configuration de relais U2N comprend une configuration de protocole de convergence de données de paquet (PDCP) (PDCP-config) ;
transmettre un message d'achèvement au réseau pour fournir une confirmation d'une application réussie du relais SL MP ; et
postposer une application de la PDCP-config pour le chemin indirect et retarder la fourniture d'une communication de trafic sur le chemin indirect jusqu'à réception d'une confirmation signalant que le chemin indirect est prêt pour utilisation.

2. UE selon la revendication 1, dans lequel la signalisation de confirmation indique qu'un saut Uu du chemin indirect est établi pour une communication en fonction d'un message de commande de ressource radio (RRC) Uu en provenance de la station de base ou d'un message RRC PC5 en provenance de l'UE relais.

3. UE selon l'une quelconque des revendications 1 à 2, dans lequel le système de circuits de traitement est configuré en outre pour amener l'UE à :
recevoir un message de libération pour libérer le relais SL MP et commuter vers un chemin unique (SP).

4. UE selon l'une quelconque des revendications 1 à 3, dans lequel la configuration de relais U2N est comprise dans au moins l'un parmi : un élément d'information (IE) de reconfiguration de commande de ressource radio (RRC) (RRCReconfiguration) pour établir le relais SL MP, un IE de configuration de protocole de convergence de données de paquet (PDCP) (PDCP-config) qui fournit une configuration de porteuse radio de signalisation (SRB) / porteuse radio de données (DRB), ou une configuration de rapport pour une liaison PC5, dans lequel la configuration SRB / DRB est configurée pour au moins l'un parmi : un fractionnement, un non-fractionnement, ou une porteuse fractionnée pour déterminer s'il faut fractionner en fonction d'un seuil, ou si une duplication de paquets est utilisée.

5. UE selon l'une quelconque des revendications 1 à 4, dans lequel le système de circuits de traitement est configuré en outre pour amener l'UE à :
recevoir un IE de configuration de MP avec une indication indiquant s'il faut configurer le relais SL MP directement au sein d'un IE de configuration de ressource radio (RRC) (RRCReconfiguration) ou dans le cadre d'un IE de reconfiguration avec synchronisation (ReconfigurationWithSync).

6. UE selon l'une quelconque des revendications 1 à 5, dans lequel la configuration de relais U2N comprend un IE de configuration de chemins multiples SL (SL-MultipathConfig), un ID d'UE relais de l'UE relais dans le chemin indirect, un temporisateur permettant d'établir le relais SL MP, et un état RRC de l'UE relais.

7. UE selon l'une quelconque des revendications 1 à 6, dans lequel le système de circuits de traitement est configuré en outre pour amener l'UE à :
déterminer s'il faut fournir le message d'achèvement en tant que message d'achèvement RRC par l'intermédiaire du chemin indirect ou du chemin direct en fonction d'une configuration SRB ou en fonction du fait que le chemin indirect ou le chemin direct est en cours de libération.

8. UE selon l'une quelconque des revendications 1 à 7, dans lequel le système de circuits de traitement est configuré en outre pour amener l'UE à :
retarder la fourniture de la communication de trafic sur le chemin indirect jusqu'à la réception d'un message RRC Uu, d'un message RRC PC5 indiquant qu'un saut Uu du chemin indirect est établi, ou d'une indication d'un état connecté de l'UE relais.

9. UE selon l'une quelconque des revendications 1 à 8, dans lequel le système de circuits de traitement est configuré en outre pour amener l'UE à :
recevoir, en provenance de l'UE relais, une indication que l'UE relais retarde la transmission d'un accusé de réception (ACK) de commande de liaison radio (RLC) associé à l'acheminement du message d'achèvement jusqu'à ce que l'UE relais établisse un saut Uu du chemin indirect.

10. UE selon l'une quelconque des revendications 1 à 9, dans lequel le système de circuits de traitement est configuré en outre pour amener l'UE à :
en réponse à une expiration de temporisateur d'un temporisateur permettant de configurer le relais SL MP, le repli vers une configuration de relais SL à chemin unique qui configure l'un du chemin indirect ou du chemin direct.

11. UE selon l'une quelconque des revendications 1 à 10, dans lequel le système de circuits de traitement est configuré en outre pour amener l'UE à :
arrêter un temporisateur pour une addition ou un changement du chemin indirect en fonction de la réception d'un message de réussite d'établissement de liaison PC5 ou de la réception du message de réussite d'établissement de liaison PC5 et d'une transmission du message d'achèvement dans le chemin direct.

12. UE selon l'une quelconque des revendications 1 à 11, dans lequel le système de circuits de traitement est configuré en outre pour amener l'UE à :
arrêter un temporisateur permettant d'établir le chemin indirect en fonction de la réception d'un message de confirmation de commande RRC de réussite du chemin indirect en provenance du réseau, ou d'un message de confirmation RRC PC5 de réussite du chemin indirect en provenance de l'UE relais.

13. UE selon l'une quelconque des revendications 1 à 12, dans lequel le système de circuits de traitement est configuré en outre pour amener l'UE à :
surveiller et rapporter dans le relais SL MP une ou plusieurs statistiques de demande de répétition automatique hybride (HARQ) par l'intermédiaire du chemin direct.

14. Station de base comprenant :
une mémoire ;
un système de circuits de traitement, couplé à la mémoire, configuré pour, lors de l'exécution d'instructions stockées dans la mémoire, amener la station de base à :
recevoir, en provenance d'un équipement utilisateur, UE, distant une demande pour une configuration de relais d'UE vers réseau (U2N), dans laquelle la configuration de relais U2N configure un relais de liaison latérale (SL) à chemins multiples (MP) permettant de communiquer concomitamment sur un chemin indirect par le biais d'un UE relais et un chemin direct entre l'UE distant et la station de base ;
transmettre un message de reconfiguration de commande de ressource radio (RRC) qui comporte des informations permettant d'établir le relais SL MP en ajoutant le chemin indirect ou le chemin direct ;
recevoir, en provenance de l'UE distant, un message d'achèvement de configuration RRC, dans laquelle le message de reconfiguration RRC à l'UE relais comprend des canaux de commande de liaison radio (RLC) relais Uu / PC5 et une configuration de protocole d'adaptation de relais de liaison latérale (SRAP), et dans laquelle le message de configuration RRC à l'UE distant comprend une configuration de chemin MP et une configuration de protocole de convergence de données de paquet (PDCP) (PDCP-config) ; et
fournir, à l'UE distant, une signalisation de confirmation indiquant que le chemin indirect est prêt pour utilisation, la signalisation de confirmation indiquant qu'un saut Uu du chemin indirect entre l'UE relais et la station de base est établi pour une communication ; et
amener l'UE distant à postposer l'application de la PDCP-config pour le chemin indirect et à retarder la fourniture de communication de trafic sur le chemin indirect jusqu'à réception du signal de confirmation.

15. Station de base selon la revendication 14, dans laquelle la configuration de relais U2N configure l'UE relais pour retarder la transmission d'un accusé de réception, ACK, RLC associé à l'acheminement du message d'achèvement jusqu'à ce que l'UE relais établisse le saut Uu.
